# EUROPEAN PATENT APPLICATION

(11) **EP 1 655 953 A1**
(43) Date of publication of application: **10.05.2006**
(21) Application number: 04748292.2
(22) Date of filing: 05.08.2004
(51) Int. Cl.: H04N 5/00

(54) **USER INTERFACE SYSTEM, PROGRAM, AND RECORDING MEDIUM**

(30) Priority: 14.08.2003 JP 2003293557
(71) Applicant: MATSUSHITA ELECTRIC INDUSTRIAL CO., LTD., Kadoma-shi, Osaka 571-8501 (JP)
(72) Inventor: MATSUI, Gantetsu, Hyogo 663-8106 (JP); NAKA, Toshiya, Hyogo 663-8005 (JP); KOJIMA, Yoshihiro, Hyogo 663-8031 (JP); SATA, Norifumi, Takarazuka-shi, Hyogo 665-0811 (JP); YAMAMOTO, Tamotsu, Hyogo 659-0096 (JP); TAGUCHI, Shuhei, Osaka 576-0041 (JP); MUKAI, Masayuki, Osaka 560-0004 (JP); OOYAMA, Tetsuo, Osaka 562-0033 (JP); YASUNO, Hiroshi, Osaka 575-0003 (JP)
(74) Representative: Crawford, Andrew Birkby
(86) International application number: PCT/JP2004/011569
(87) International publication number: WO 2005/018222

(57) **Abstract**

There is provided a user interface with which a greater number of processes are executable in response to user operations made to a directional input device. When the directional input device receives a first direction followed by a second direction within a predetermined time period, the amount of change from the first direction to the second direction is calculated. If the calculated change amount exceeds a predetermined range, a first processes associated with each of the first and second directions is performed. If the calculated change amount falls within the predetermined range, a second process associated with the change amount is performed.

## Description

### Technical Field

The present invention relates to a user interface system for executing processes in accordance with user operations made to a directional input device.

### Background Art

Currently, directional input devices are in use in various industrial fields.

A directional input device mentioned herein has an operating member, and receives at a point in time an input specifying one of at least three directions with a touch of the operating member by a user. Generally, operating members are called directional buttons, cross buttons, and so on. A user operation of touching an operating member mentioned herein involves pushing down or pressing the operating member.

Such a directional input device is implemented on, for example, AV appliances, mobile phones, game machines, controllers of radio-controlled toys.

Generally speaking, user interfaces are demanded to provide simple and easy use. For the sake of excellent usability, it is preferable that one process is executed at a single input operation.

In the case of user interface systems employing a directional input device, such a system normally stores a table associating each direction with a process to be executed. In response to an input specifying one direction, the system executes a process associated with the direction with reference to the table.

For example, a user interface system is provided for a game in which a character displayed on a screen is to be moved up, down, right, and left on the screen. Such a game program normally stores a table associating directional inputs with processes of moving the character in the respective directions on the screen. For example, when a user touches an upper portion of a cross button provided on the game machine, the character moves up on the screen.

Unfortunately, however, in order to execute various processes by operating a directional input device, the number of directions available for input is limited. Due to this limitation, the one-to-one association between directions and processes will leave no available directions left unassociated while there are some more processes yet to be associated.

One way to address the above problem is to provide a table associating each direction with different processes in different input modes. By switching the input modes, a greater number of processes are executable by operating the directional input device.

However, even if the system switches from one input mode to another, users may not be able to keep up with the input mode switching and make erroneous input operations. In other words, such a system does not offer sufficient usability.

Another way to address the above problem is to associate each operation to be executed, with a series of directional inputs, as in a hidden command. This scheme requires users to make a number of directional inputs in series in a correct order, which apparently impair the usability.

### Disclosure of the Invention

In view of the above problems, the present invention aims to provide a user interface system with which the number of processes executable in response to a user operation to a directional input device increases comparing a conventionally available number of processes, without compromising ease and simplicity in the usability. The present invention also aims to provide techniques related to the system.

To achieve the above aim, a user interface system according to the present invention includes: a directional input unit having an operating member, and operable to receive at a point in time an input specifying one of at least three different directions, in response to a user operation of touching the operating member; a calculating unit operable to calculate an amount of change from a first direction to a second direction, when the directional input unit receives an input specifying the first direction followed within a predetermined time period by an input specifying the second direction; a judging unit operable to judge whether the calculated amount of change falls within a predetermined range; and a processing unit operable to perform a first process associated with each of the first and second directions when the judging unit judges negatively, and perform a second process associated with the amount of change when the judging unit judges affirmatively.

The user interface system having the above-stated structure judges, when receiving an input of a first direction followed within a predetermined time period by an input of a second direction, whether an amount of change from the first direction to the second direction calculated by the calculating unit falls within the predetermined range. In accordance with the judgment, the user interface system performs either a first process associated with each direction received or a second process associated with the calculated amount of change. In other words, when a user operation is made to the operating member, the user interface system according to the present invention judges whether the user operation is instructing execution of a process associated with the input direction or instructing execution of a process associated with the amount of change between input directions.

This structure achieves to increase the number of processes executable in response to a user operation to the directional input device.

With the above structure, it is possible to omit, f or example, a jog dial conventionally used for receiving a rotational amount and causing a process to be performed depending on the received rotational amount. Processes conventionally associated with user operations to a jog dial can be associated with user operations to the directional input device. Thus, the size and cost reduction of a remote controller can be achieved.

Here, when the input specifying the first direction is followed within the predetermined time period by two or more inputs specifying directions different from the first direction, the calculating unit may calculate the amount of change from the first to second directions which are specified respectively by the inputs received first and last within the predetermined time period.

Here, one of the directions available for an input to the operating member may be a reference direction and each of the directions may be expressed by an angle formed with the reference direction. The calculating unit may calculate an amount of angular change from a first angle expressing the first direction to a second angle expressing the second direction, when the directional input unit receives the input specifying the first direction followed within the predetermined time period by the input specifying the second direction.

Here, each of the directions available for an input to the operating member may be expressed by 360° with respect to the reference direction at 0°. The predetermined range may be 10° < |amount of angular change| < 160°.

With the above-stated structures, when the calculated amount of angular change is (i) less than 10° or (ii) equal to or greater than 161°, a corresponding input operation is judged as a directional input operation. Thus, even if a user makes a directional input operation with unintentional shaking of his hand or finger, it is avoided that the input operation is judged as a rotational operation. Further, when two inputs specifying directions are successively made within the predetermined time period and the amount of angular change between the two directions is equal to or greater than 161°, such inputs are judged as two different input operations.

Here, the user interface system may further include: a determining unit operable to determine, when the judging unit judges affirmatively and a process most recently performed is a first process, a second process as a candidate process to be performed; and a counting unit operable to keep count of how many times the determination is made. When the determination count reaches a predetermined number, the processing unit may perform second processes associated with the respective amounts of angular change having been calculated for making the determination. Alternatively, the user interface system may further include: a determining unit operable to determine, when the judging unit judges negatively and when a process most recently performed is a second process, a first process as a candidate process to be performed; and a counting unit operable to keep count of how many times the determination is made. When the determination count reaches a predetermined number, the processing unit may perform first processes associated with the respective directions having been received for making the determination.

With the above-stated structures, no process is immediately performed if it is judged that a most recently performed process is a first process and a process to be performed is a second process, and vice versa. This arrangement achieves to reduce an undesirable possibility that an input operation is judged differently from the user intention and thus a process different from the user intention is performed.

Here, when the input specifying the first direction is followed within the predetermined time period by no input specifying another direction, the processing unit may perform a first process associated with the first direction.

Here, the directional input unit may include: a resistive layer formed on an insulating substrate; a conducting member formed on a planar substrate facing the resistive layer across a predetermined insulating gap; and the operating member used to bring the resistive layer partially into contact with the conducting member. In response to a user operation of touching the operating member under a condition where a predetermined voltage is applied to the resistive layer, the insulating substrate and the planar substrate are brought partially into contact, so that an input specifying a direction is received based on a voltage conducted as a result of the partial contact.

Here, the user interface system according may further include: a display unit operable to display (i) a group of options in an annular array, and (ii) a selected position movable to any of the options to indicate that the option is currently focused or selected; and a storage unit operable to store a first table and a second table. The first table associates the individual directions with the options, and the second table associates the individual amounts of change with movement directions and amounts of the selected position. When the judging unit judges negatively, the processing unit may refer to the first table to accordingly perform the first process, so that an option associated with each direction input to the directional input unit is focused or selected. When the judging unit judges affirmatively, the processing unit may refer to the second table to accordingly perform the second process, so that the selected position is moved in a movement direction and amount associated with the calculated amount of change.

With the above-stated structures, a user can select a desired option through a first process if the option is included in the first table. If not, the user can move the selected position through a second process.

Here, the user interface system may further include: a display unit operable to display a plurality of files and folders in an annular array; and a storage unit operable to store a first table and a second table. The first table associates the individual directions with the files, and the second table associates the individual amounts of change with movement directions and amounts of a selected one of the files. When the judging unit judges negatively, the processing unit may refer to the first table to accordingly perform the first process, so that a file associated with each direction input to the directional input unit is selected. When the judging unit judges affirmatively, the processing unit may refer to the second table to accordingly perform the second process, so that a currently selected file is moved in a movement direction and amount associated with the calculated amount of change and placed into a folder if the selected file is moved to where the folder is located.

With the above-stated structure, a user can select a desired file through a first process, and move the thus selected file into a desired folder through a second process.

Here, the user interface system may further include: a display unit operable to display an image of a dial on which a group of letters are arranged in an annular array; and a storage unit operable to store a table associating the individual amounts of change with rotational directions and amounts of the dial. When the judging unit judges negatively, the processing unit may perform the first process, so that each input to the directional input unit is discarded and causes no text input. When the judging unit judges affirmatively, the processing unit may refer to the table to accordingly perform the second process, so that the dial is rotated in a rotational direction and amount associated with the calculated amount of change and that text of a letter placed at a predetermined position as a result of the rotation is input.

With the above-stated structure, a first process causes no text input, which helps to prevent a third party from easily inputting a PIN.

Here, the user interface system may further include: a playback unit operable to play content with audio; and a storage unit operable to store a first table and a second table. The first table associates the individual directions with processes to be performed, and the second table associates the individual amounts of change with levels of audio output of content targeted for playback. When the judging unit judges negatively, the processing unit may refer to the first table to accordingly perform the first process associated with each direction input to the directional input unit. When the judging unit judges affirmatively, the processing unit may refer to the second table to accordingly perform the second process, so that the content is played with audio output at a level associated with the calculated amount of change.

With the above-stated structure, a user can set the audio output level of content through a second process.

Here, the user interface system may further include: a playback unit operable to play content; and a storage unit operable to store a first table and a second table. The first table associates the individual directions with processes to be performed, and the second table associates the individual amounts of change with speeds at which content targeted for playback is fast-forwarded or rewound. When the judging unit judges negatively, the processing unit may refer to the first table to accordingly perform the first process associated with each direction input to the directional input unit. When the judging unit judges affirmatively, the processing unit may refer to the second table to accordingly perform the second process, so that the content is fast-forwarded or rewound at a speed associated with the calculated amount of change.

With the above-stated structure, a user can select through a second process a desired speed at which content targeted for playback is fast-forwarded or rewound.

Here, the user interface system may further include: a display unit operable to display (i) a chart composed of options in an array and (ii) a selected position movable to any of the options to indicate the option is currently focused or selected; and a storage unit operable to store a first table and a second table. The first table associates the individual directions with movement directions of the selected position, and the second table associates the individual amounts of change with scaling factors by which a displayed part of the chart is scaled up or down with the selected position as a center. When the judging unit judges negatively, the processing unit may refer to the first table to accordingly perform the first process, so that the selected position is moved in a movement direction associated with each direction input to the directional input unit. When the judging unit judges affirmatively, the processing unit may refer to the second table to accordingly perform the second process, so that a displayed part of the chart is scaled up or down by a scaling factor associated with the calculated amount of change.

With the above-stated structure, a user can move the selected position through a first process and scale up or down a displayed chart through a second process.

Here, the user interface system may further include: a display unit operable to display a map and a cursor; and a storage unit operable to store a first table and a second table. The first table associates the individual directions with movement directions of the cursor on the map, and the second table associates the individual amounts of change with scaling factors by which a displayed part of the map is scaled up or down with the cursor as a center. When the judging unit judges negatively, the processing unit may refer to the first table to accordingly perform the first process, so that the cursor is moved in a movement direction associated with each direction input to the directional input unit. When the judging unit judges affirmatively, the processing unit may refer to the second table to accordingly perform the second process, so that a displayed part of the map is scaled up or down by a scaling factor associated with the calculated amount of change.

With the above-stated structure, a user can move a cursor on a map through a first process, and scale up or down the map through a second process.

Here, the user interface system may further include: a managing unit operable to rank and manage a plurality of options; a display unit operable to display a group of options in a spiral array, the group including a predetermined number of options of consecutive ranks out of the plurality of options managed by the managing unit; and a storage unit operable to store a first table and a second table. The first table associates the individual directions with the currently displayed options, and the second table associates the individual amounts of change with numbers by which a ranking range of the currently displayed options are to be shifted. When the judging unit judges negatively, the processing unit may refer to the first table to perform the first process, so that an option associated with each direction input to the directional input unit is focused or selected. When the judging unit judges affirmatively, the processing unit may refer to the second table to perform the second process, so that another group of options is displayed, said another group including consecutive options within a ranking range shifted from the current ranking range by a number associated with the calculated amount of change.

With the above-stated structure, a user can select through a first process a desired option from among a group of n options currently displayed in a spiral array. The user can cause a different group of n options to be displayed through a second process. The group displayed through the second process includes new options displacing a corresponding number of options from the currently displayed group.

Here, the user interface system may further include: a display unit operable to display an image of a vinyl record; a storage unit operable to store a first table and a second table, the first table associating the individual directions with sounds, and the second table associating the individual amounts of change with scratch sounds; and an output unit operable to produce audio output. When the judging unit judges negatively, the processing unit may refer to the first table to accordingly perform the first processes, so that the output unit produces a sound associated with each direction input to the directional input unit. When the judging unit judges affirmatively, the processing unit may refer to the second table to accordingly perform the second process, so that the output unit produces a scratch sound associated with the calculated amount of change.

With the above-stated structure, a user can cause any sound to be output through a first process, if the sound is included in the table 1. Also, the user can cause any sound to be output through a second process, if the sound is included in the table 2.

In another aspect, the present invention provides a program for use by a computer having an operating member and a directional input unit that is operable to receive at a point in time an input specifying one of at least three directions. The program includes code operable to cause the computer to perform: a calculating step of calculating an amount of change from a first direction to a second direction, when the directional input unit receives an input specifying the first direction followed within a predetermined time period by an input specifying the second direction; a judging step of judging whether the calculated amount of change falls within a predetermined range; and a step of performing a first process associated with each of the first and second directions when the judging unit judges negatively, and performing a second process associated with the amount of change when the judging unit judges affirmatively.

In yet another aspect, the present invention provides a computer-readable recording medium storing a program for use by a computer having an operating member and a directional input unit that is operable to receive at a point in time an input specifying one of at least three directions. The program includes code operable to cause the computer to perform: a calculating step of calculating an amount of change from a first direction to a second direction, when the directional input unit receives an input specifying the first direction followed within a predetermined time period by an input specifying the second direction; a judging step of judging whether the calculated amount of change falls within a predetermined range; and a step of performing a first process associated with each of the first and second directions when the judging unit judges negatively, and performing a second process associated with the amount of change when the judging unit judges affirmatively.

When a user input operation specifying a first direction is followed within a predetermined time period by a user input operation specifying a second direction, a computer executing the above-mentioned program judges whether a calculated amount of change from the first direction to the second direction falls within the predetermined range, and performs according to the judgment a first process associated with the input direction or a second process associated with the calculated amount of change. That is to say, a user operation made to the input member is judged either as instructing execution of a process associated with a direction input to the operating member or as instructing execution of a process associated with an amount of change from a first direction to a second direction that is input within the predetermined time period from the input of the first direction. An appropriate process is then performed according to the judgment. Thus, user operations touching an operating member are associated with a greater number of processes to be executed than the number of processes conventionally available. Furthermore, an amount of change from one direction to another is calculated in response to extremely simple and easy operations inputting at least two directions.

### Brief Description Of The Drawings

FIG. 1 shows the structure of an STB;
FIG. 2 shows the external representation of a remote controller 4;
FIG. 3 shows a sectional view of operating members 41 and 42 taken vertically along the line A-A' shown in FIG. 2, and also shows a resistive layer provided below the operating member 41;
FIG. 4 shows a functional block diagram of the remote controller 4;
FIG. 5 shows the data structure of a controller code;
FIG. 6 is a flowchart illustrating user interface processing;
FIG. 7 is a view illustrating a specific example of the user interface processing;
FIG. 8 shows an exemplary GUI screen according to an example 1;
FIG. 9 shows a table associating individual pieces of angular information with processes to be performed according to the example 1;
FIG. 10 shows a table associating individual amounts of angular change with processes to be performed;
FIG. 11 shows an exemplary GUI screen according to the example 1;
FIG. 12 shows an exemplary GUI screen according to the example 1;
FIG. 13 shows an exemplary GUI screen according to an example 2;
FIG. 14 shows a table associating individual pieces of angular information with processes to be performed according to the example 2;
FIG. 15 shows an exemplary GUI screen according to an example 3;
FIG. 16 shows a' table associating pieces of angular information and processes to be performed according to the example 3;
FIG. 17 shows an exemplary GUI screen according to an example 4;
FIG. 18 shows a table associating individual pieces of angular information and processes to be performed according to the example 4;
FIG. 19 shows an exemplary GUI screen according to an example 5;
FIG. 20 shows a table associating individual pieces of angular information with processors to be performed according to the example 5;
FIG. 21 shows an exemplary GUI screen according to an example 6;
FIG. 22 is a table associating individual amounts of angular change with processes to be performed according to the example 6;
FIG. 23 shows an exemplary GUI screen according to the example 6;
FIG. 24 shows an exemplary GUI screen according to an example 7;
FIG. 25 shows a table associating individual pieces of angular information with processes to be performed according to the example 7;
FIG. 26 shows a table associating individual amounts of angular change with processes to be performed according to the example 7;
FIG. 27 shows an exemplary GUI screen according to an example 8;
FIG. 28 shows a table associating individual pieces of angular information with processes to be performed according to the example 8;
FIG. 29 shows a table associating individual amounts of angular change with processes to be performed according to the example 8;
FIG. 30 shows an exemplary GUI screen according to an example 9;
FIG. 31 shows a table associating individual pieces of angular information with processes to be performed according to the example 9;
FIG. 32 shows a table associating individual amounts of angular change with processes to be performed according to the example 9;
FIG. 33 shows an exemplary GUI screen according to the example 9;
FIG. 34 shows an exemplary GUI screen according to the example 10;
FIG. 35 shows a table associating individual pieces of angular information with processes to be performed according to the example 10;

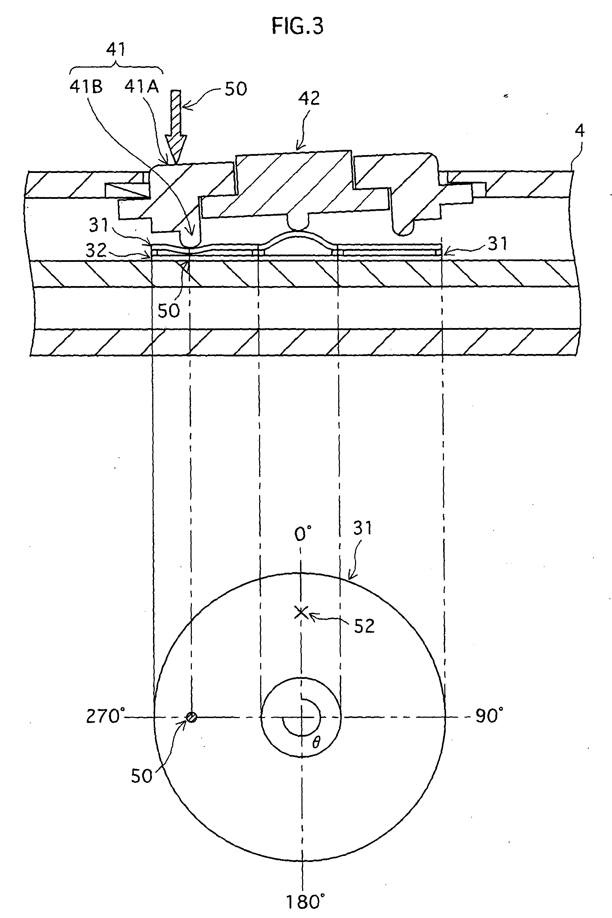

FIG. 3 6 shows an exemplary GUI screen according to an example 10;

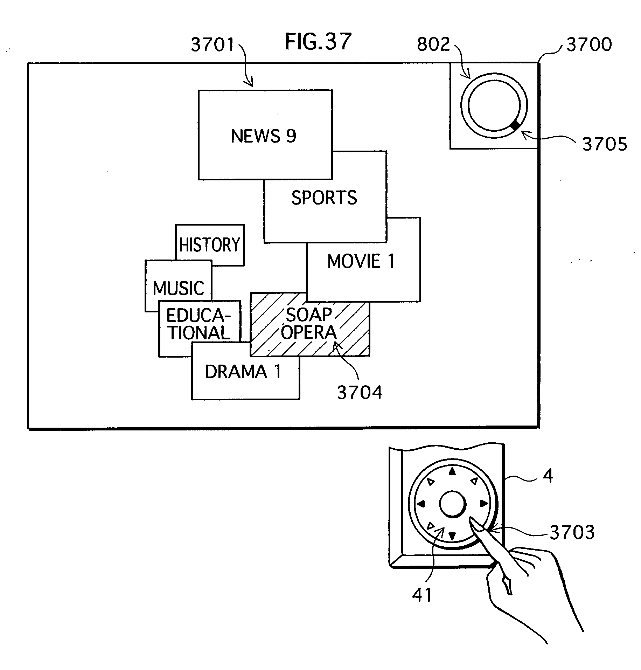

FIG. 37 shows an exemplary GUI screen according to an example 11;

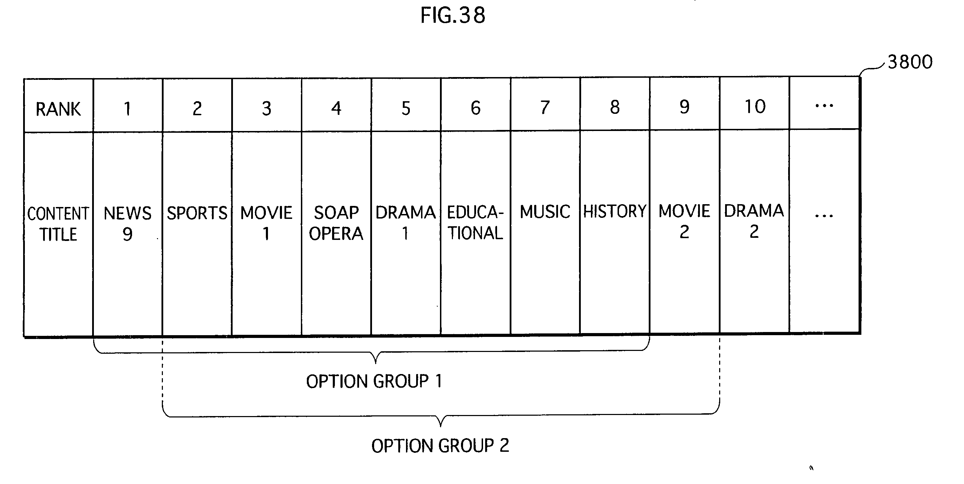

FIG. 38 shows exemplary control information relating to contents;

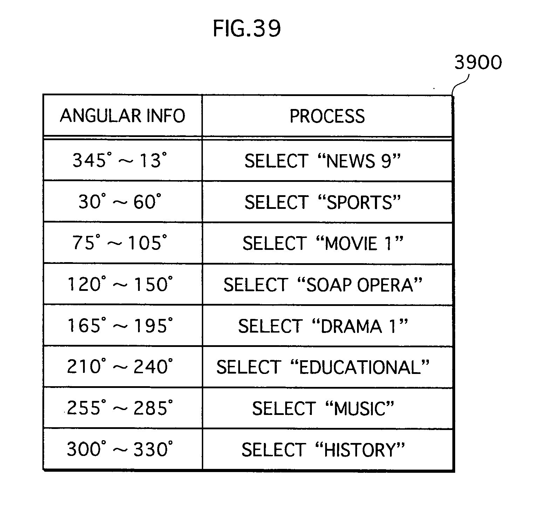

FIG. 39 shows a table associating individual pieces of angular information with processes to be performed according to an example 11;

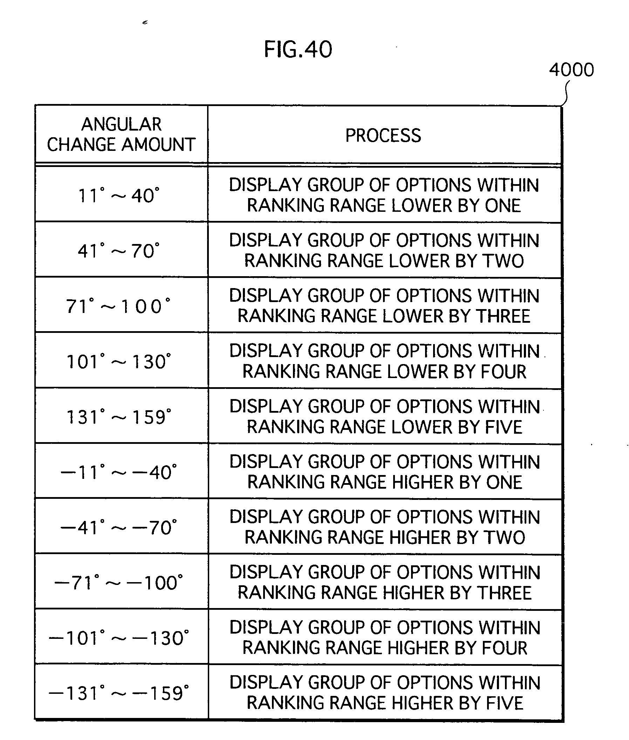

FIG. 40 shows a table associating individual amounts of angular change with processes to be performed according to the example 11;

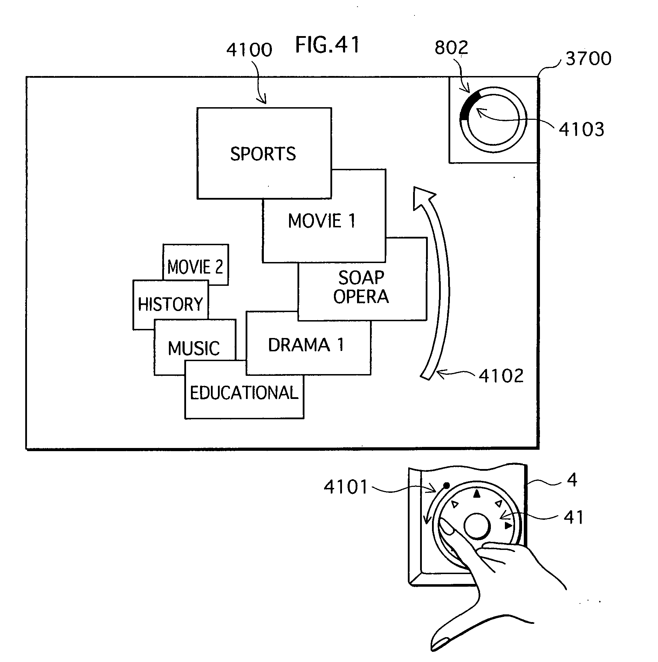

FIG. 41 shows an exemplary GUI screen according to an example 12;

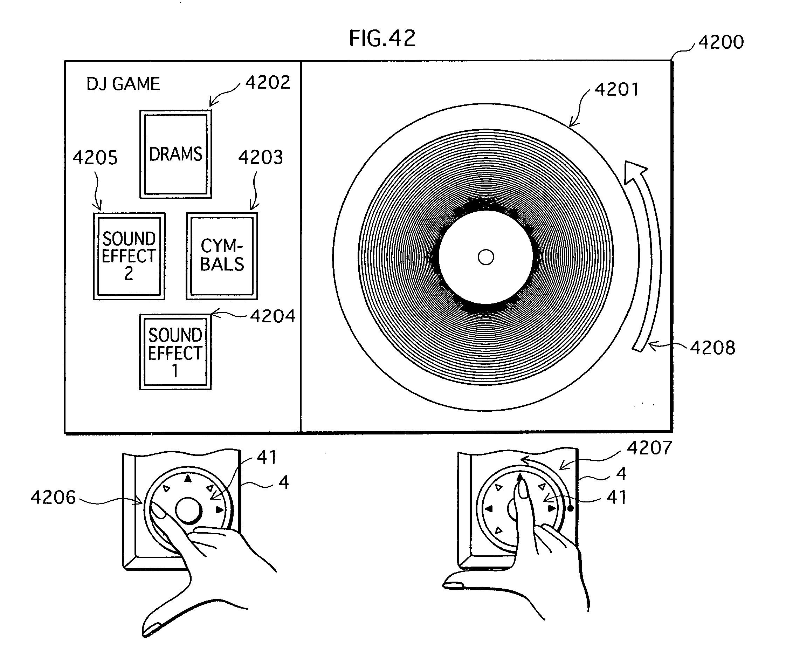

FIG. 42 shows an exemplary GUI screen according to the example 12;

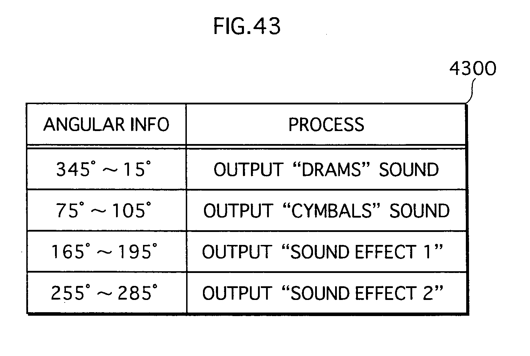

FIG. 43 shows a table associating individual pieces of angular information with processes to be performed according to the example 12;

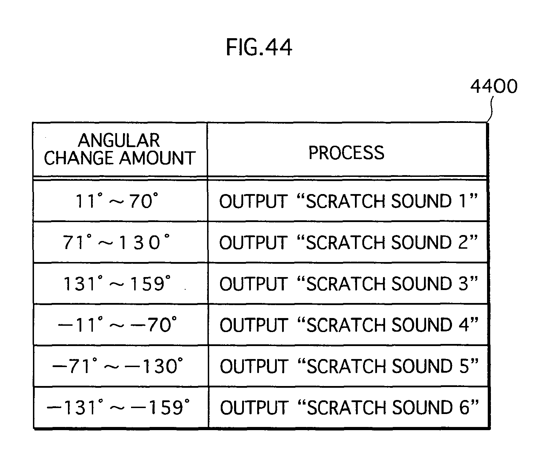

FIG. 44 shows a table associating individual amounts of angular change with processes to be performed according to the example 12; and

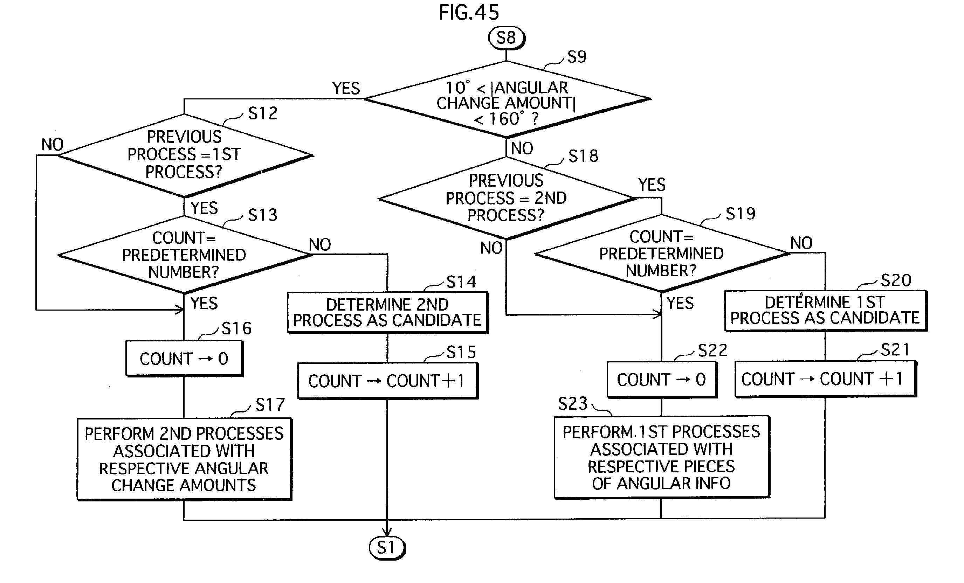

FIG. 45 is a supplemental flowchart illustrating modified user interface processing.

### Best Mode for Carrying Out the Invention

### <OVERVIEW>

According to features of the present invention, when executing a process in accordance with a user operation made to a directional input device, a user interface system judges that the user operation instructs execution of either a process associated with an input direction (hereinafter, a "directional operation") or a process associated with an amount of directional change (hereinafter, a "rotational operation"), and executes a process according to the judgment.

Hereinafter, a description is given to an STB (Set Top Box) as an embodiment of the present invention.

### <STRUCTURE OF STB>

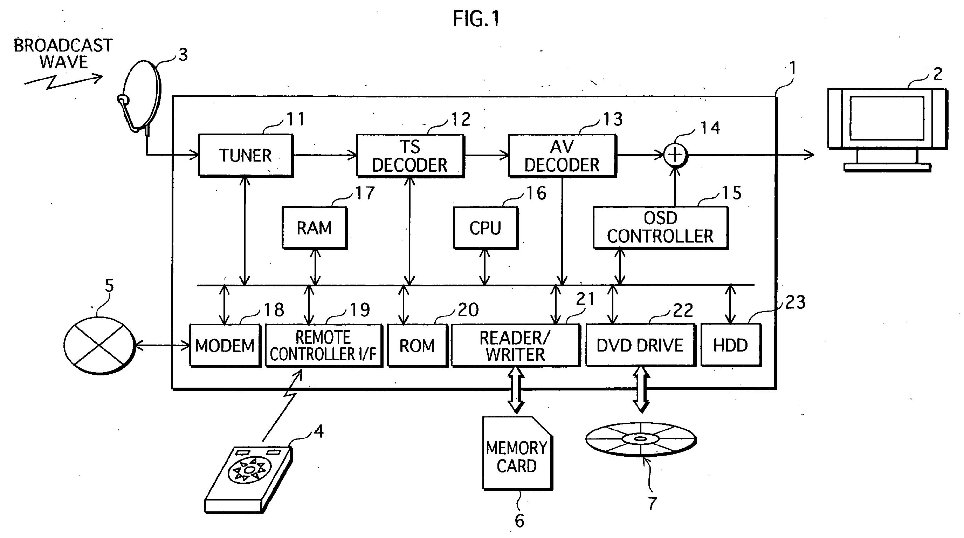

FIG. 1 shows the structure of the STB according to the embodiment of the present invention.

The STB 1 shown in the figure is composed of hardware components, including a tuner 11, a TS decoder 12, an AV decoder 13, a compositor 14, an OSD controller 15, a CPU 16, a RAM 17, a modem 18, a remote controller I/F 19, a ROM 20, a reader/writer 21, a DVD drive 22, and an HDD 23.

The CPU 16 executes a program stored in the ROM 20 or HDD 23 to control the hardware components, so that the STB 1 performs various functions, which include functions of GUI, digital broadcast receiving, Internet communications, reading and writing of memory cards and DVDs, and playback and recording of content.

The term "content" used herein refers to such information as images (still and moving images), music, WEB pages, and application programs.

The STB1 is provided with a remote controller 4. Users can input various instructions to the STB1 by operating an operating member on the remote controller 4.

For example, the remote controller 4 transmits a remote controller code (hereinafter, "controller code") instructing the STB 1 to display a menu selection screen. Upon receipt of the controller code, the STB 1 displays on a display device 2 a list of option items on a menu and receives a selection of an option item from the list according to a user operation made to an operating member.

In the figure, in addition, the STB 1 is connected to an antenna 3, a network 5, and the display device 2.

The tuner 11 performs digital demodulation and error correction of a broadcast wave received by the antenna 3, and outputs a transport stream (hereinafter "TS") to the TS decoder 12.

The TS decoder 12 performs decryption and selection of TS packets constituting the TS received from the TS decoder, and extracts packetized elementary streams (hereinafter, "PESs) or sections and outputs the extracted PESs or sections to the AV decoder 13 and the RAM 17.

The AV decoder 13 performs a series of processes needed for playback of content having been compression-coded according to the MPEG (Moving Picture Experts Group) standard. More specifically, the AV decoder 13 performs decompression of video and audio data of the content, synchronization of video and audio output, andD/Aconversion. TheAV decoder 13 outputs a resulting signal to the compositor 14.

The OSD controller 15 functions to generate graphics such as a GUI screen. The menu selection screen mentioned above is one example of a GUI screen. The thus generated graphics signal is outputted to the compositor 14.

The compositor 14 combines video and graphics signals outputted from the AV decoder 13 and the OSD controller 15, respectively, and outputs a composite signal to the display device 2.

The modem 18 is used to communicate with other devices connected to the network 5. For example, content may be acquired from a content server connected to the network 5. The thus acquired content may be stored in the HDD 23 or sequentially played by the AV decoder 13 using the RAM 17 as a buffer.

The remote controller I/F 19 is an interface for receiving a controller code transmitted from the remote controller 4, with is included with the STB 1, by way of infrared wireless communications.

The reader/writer 21 is used to read content from, and write content to a memory card 6 inserted into the reader/writer.

The DVD drive 22 is used to read content from, and write content to a DVD 7 mounted on the DVD drive. Note that the DVD 7 may be any writable medium such as DVD-R, DVD-RW, and DVD-RAM.

The HDD 23 is used to read content from, and write content to a hard disk. The contentmaybe constituted of PESs or sections outputted from the TS decoder, may be acquired by the modem 18 from a content server, may be read by the reader/writer 21, or may be read by the DVD drive 22.

### <REMOTE CONTROLLER>

Next, a description is given to the remote controller 4.

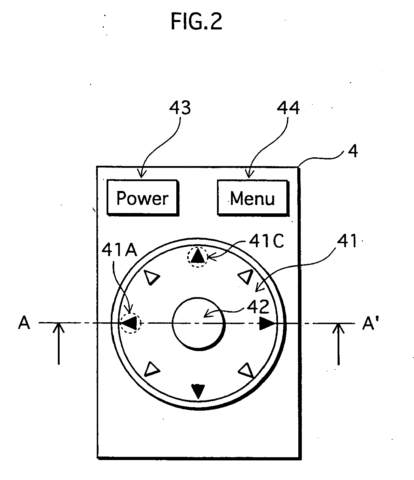

FIG. 2 shows the external representation of the remote controller 4.

The remote controller 4 is provided with operating members 41, 42, 43, and 44. In response to a user operation made by touching any of the operating members with a finger, for example, the remote controller 4 transmits a controller code corresponding to the operation, to the STB 1 by way of infrared wireless communications.

Specifically, the operating member 42 is an enter button for confirming an entry. With a touch by a user with e.g. a finger, the operating member 42 is pressed down to in turn press down a non-illustrated conducting switch, which is providedbelow the operating member 42. As a result, a voltage of a predetermined value is generated. In accordance with the voltage, the remote controller 4 generates and transmits a controller code indicating "enter".

The operating member 43 is a power ON/OFF switch of the STB 1. Similarly to the operating member 42 described above, the operating member 43 generates a voltage of a predetermined value in response to a finger operation by a user. In accordance with the voltage, the remote controller 4 generates and transmits a controller code indicating a power ON/OFF instruction.

The operating member 44 is a menu button. Similarly to the operating member 42 described above, the operating member 44 generates a voltage of a predetermined value in response to a finger operation by a user. In accordance with the voltage, the remote controller 4 generates and transmits a controller code indicating an instruction for displaying a menu screen.

The operating member 41 is a button for a directional input is similar in structure to a multi-directional input device disclosed in JP patent application publication No. 2002-117751. Since the publication provides the details, a description herein is given only briefly.

As shown in the figure, the operating member 41 is shaped like a disc having a through hole at the center, through which the operating member 42 penetrates the operating member 41.

FIG. 3 is a sectional view of the operating members 41 and 42 taken vertically along the line A-A' shown in FIG. 2. The figure also shows a ring-shaped resistive layer provided below the operating member 41.

Below the resistive layer 31 is a conductive layer 32 also having a ring shape. A voltage is applied to the resistive layer 31.

Suppose, for example, a user touches a point 41A on a main surface of the operating member 41, so that the operating member 41 tilts. As a result of the tilting, a projection 41B provided on the undersurface of the operating member 41 comes to press down a portion 50 of the resistive layer 31. Consequently, the resistive layer 31 is brought into contact with the conductive layer 32 on the undersurface of the portion 50, so that the voltage across the resistive layer 31 is divided with the conductive layer 32.

The resistance varies depending on the location of contact point of the resistive layer 31 with the conductive layer 32. Thus, the contact point is located with reference to the magnitude of the divided voltage.

To express the locations of points on the main surface of operating member 41, the center of the operating member 41, i.e. the center of the through hole is determined as a reference point. Each point is then expressed by 360° with respect to a direction from the reference point to a point 41C (portion 52) at angle 0°. For example, when a user touches the point 41A with his finger, a later-described controller code generating unit 402 generates, based on the magnitude of voltage detected, a controller code that includes angular information specifying the contact point expressed as an angel of 270°.

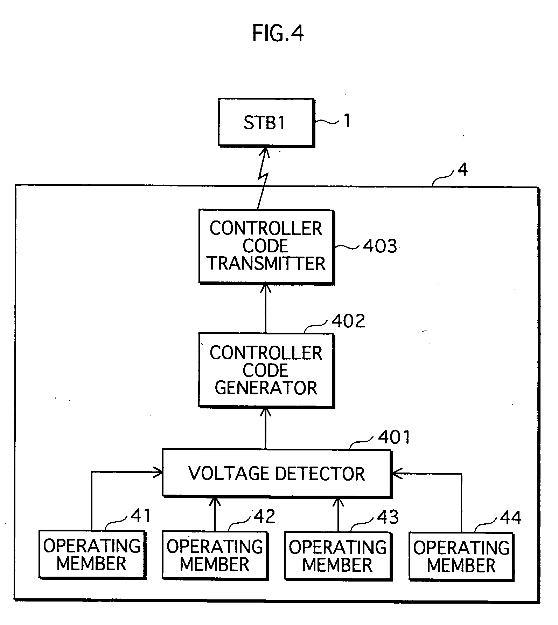

Next, a description is given to the functional structure of the remote controller 4. FIG. 4 shows a functional block diagram of the remote controller 4.

The remote controller 4 is provided with the operating members 41, 42, 43, and 44, a voltage detector 401, a controller code generator 402, and a controller code transmitter 403.

The voltage detector 401 functions to detect a voltage generated in response to a touch operation to any of the operating members 41, 42, 43, and 44. The value of detected voltage is passed to the controller code generator 402.

The controller code generator 402 functions to generate a controller code based on the voltage value detected by the voltage detector 401.

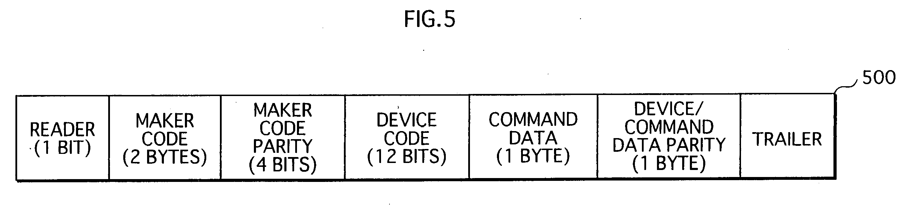

FIG. 5 shows the data structure of a controller code.

A controller code 500 is composed of a reader (1 bit), a maker code (2 bytes), a maker code parity (4 bits), a device code (12 bits), command data (1 byte), a device/command data parity (1 byte), and a trailer.

The device code identifies whether an input code relates to the operating member 41 or to one of the operating members 42, 43, and 44.

The command data is a command specified by angular information that indicates an angle locating the contact point according to the value of voltage detected in response to a user operation to the operating member 41. Alternatively, the command data may be a command specified by the value of voltage detected in response to a user operation to any of the operating members 42, 43, and 44.

The thus generated controller code is passed to the controller code transmitter 403.

The controller code transmitter 403 transmits the controller code generated by the controller code generator 402, to the remote controller I/F 19 of the STB 1 by way of infrared wireless communications.

### <SYSTEM OPERATION>

Next, a description is given to a user interface processing performed by the STB 1 based on a controller code that is transmitted from the remote controller 4 in response to an input operation made by a user to the operating member 41.

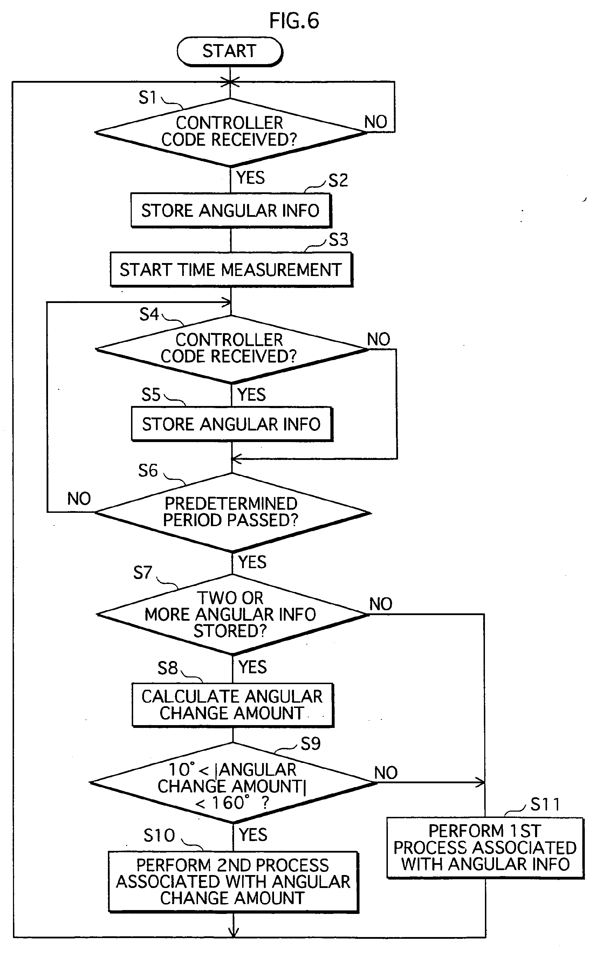

FIG. 6 is a flowchart illustrating the user interface processing by the STB 1.

First, the STB 1 receives from the remote controller 4 a controller code that includes a device code identifying an input code relating to the operating member 41 (step S1: YES) . Upon receipt, the STB 1 stores angular information included in the controller code to the RAM 17 (step S2), and starts time measurement (step S3).

When subsequently receiving another controller code that includes a device code specifying an input code relating to the operating member 41 (step S4: YES), the STB 1 stores angular information to the RAM 17 (step S5), and goes onto a step S6. On the other hand, when receiving no other such a controller code in the step S4 (step S4 : NO), the STB 1 goes onto the step S6.

The step 4 is repeated until a predetermined time period has passed from the start of time measurement (step S6: NO). Upon expiration the predetermined time period (step S6: YES), the processing moves onto a step S7.

In the step S7, if the RAM 17 stores two or more pieces of angular information indicating mutually different directions (step S7: YES), the STB 1 calculates the amount of change between the angles indicated by the first and last storedpieces of angular information (step S8).

Next, the STB 1 judges whether the absolute value of the amount of angular change satisfies the condition 10° < |Amount of Angular Change| < 160° (step S9) . If the condition is satisfied (step S9: YES), the STB 1 performs a second process associated with the amount of angular change (step S10), and goes back to the step S1.

In the step S7, the RAM 17 may not store a plurality of pieces of angular information indicating mutually different directions (step S7: NO). In the step S9, the amount of angular change may not satisfy the condition 10° < |Amount of Angular Change| < 160° (step S9: NO) . In either case, the STB 1 performs, for each piece of angular information stored in the RAM 17, a first process associated therewith (step S11). The processing then goes back to the step S1.

In other words, the user interface processing described above is to judge each of the following four different types of input operations either as a directional operation instructing execution of a first process or as a rotational operation instructing execution of a second process.

### (1) Input operation of touching a single point on the main surface of the operating member 41

In response to this operation, the remote controller 4 sequentially transmits a controller code that includes angular information indicating the direction of the single point touched. Thus, the judgment in the step S7 results in that the STB 1 performs a first process associated with the angular information.

### (2) Input operation of touching a single point with unintentional shaking (± 10°)

In response to this operation, the remote controller 4 sequentially transmits remote control codes each including angular information that indicates a slightly different direction. In the embodiment, it is assumed that unintentional shaking of user's hand results in deviation in ± 10°. Thus, the amount of angular change is required to fall within the predetermined range to be regarded as a rotational operation. When the amount of angular change between the angels specified by respective pieces of angular information included in remote control codes is smaller than ± 10°, the STB determines the angular change is caused by unintentional shaking and thus performs a first process according to the angular information.

### (3) Successive input operations touching a single point on the main surface of the operating member 41 and then touching a point forming an angel of 160° or larger with the point touched first

In response to the above successive operations, the remote controller 4 transmits controller codes and the amount of angular change calculated from the controller codes is not smaller than ± 160°. That is, the condition 10° < |Amount of Angular Change| < 160° is not satisfied. Consequently, the STB 1 performs first processes each associated with a different one of the respective pieces of angular information.

### (4) Input operation sliding over the main surface of the operating member 41 clockwise or counterclockwise

In response to this operation, the remote controller 4 sequentially transmits controller codes each including angular information specifying a respective direction. Upon receipt of the controller codes, the STB 1 calculates the amount of angular change between the respective pieces of angular information. If the thus calculated amount of angular change satisfies the condition 10° < |amount of Angular Change| < 160°, the STB 1 performs a second process associated with the amount of angular change.

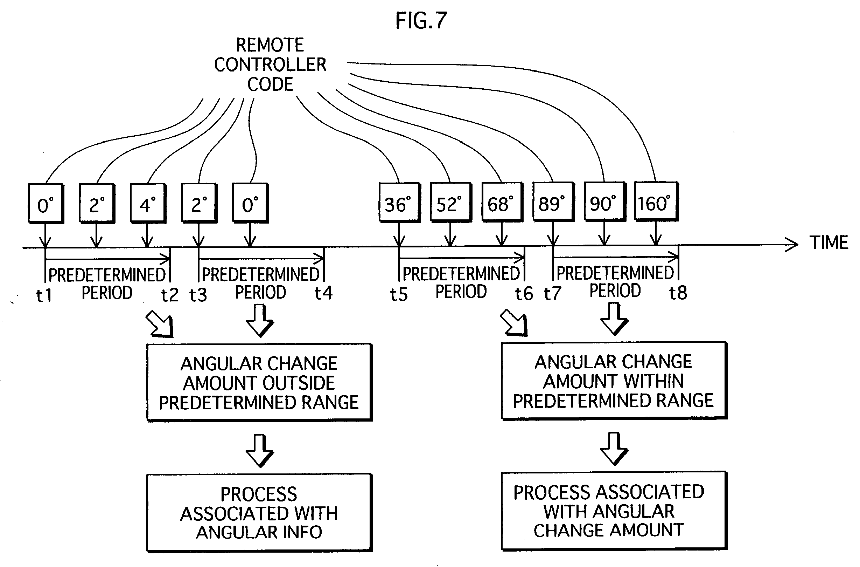

Here, with reference to FIG. 7, a specific example of the user interface processing is described.

The remote controller codes shown in the figure all include a device code identifying an input code relating to the operating member 41 and also include angular information.

While a user keeps touching the operating member 41, the remote controller 4 repeatedly transmits a controller code at intervals of 125 ms. The predetermined time period measured in the example shown in the figure is 400 ms.

Three controller codes are received within the predetermined time period between the points of time *t1* and *t2* on the time axis *t*. The respective controller codes include pieces of angular information indicating angles of 0°, 2°, and 4°. The amount of angular change between the angles indicated by the first and last stored pieces of angular information is +4°, which fails to satisfy the condition 10° < |Amount of Angular Change| < 160°. Consequently, the STB 1 performs a first process associated with the angular information.

During the predetermined time period between the points of time *t3* and *t4*, two controller codes are received and the respective controller codes include pieces of angular information indicating angles of 2° and 0°. Here, the amount of angular change is -2°, which fails to satisfy the condition 10° < |Amount of Angular Change| < 160°. Consequently, the STB 1 performs a first process associated with the angular information.

During the predetermined time period between the points of time t5 and t6, three controller codes are received and the respective controller codes include pieces of angular information indicating angles of 36°, 52°, and 68°. Here, the amount of angular change between the first and last stored pieces of angular information is +32°, so that the condition 10° < |Amount of Angular Change| < 160° is satisfied. Consequently, a second process associated with the amount of angular change is performed.

During the predetermined time period between the points of time t7 and t8, three controller codes are received, and the respective controller codes include pieces of angular information indicating angles of 88°, 90°, and 160°. Here, the amount of angular change between the first and last stored pieces of angular information is +72°, so that the condition 10° < |Amount of Angular Change| < 160° is satisfied. Consequently, a second process associated with the amount of angular change is performed.

### <EXAMPLES>

Now, a description is given to examples of GUIs (Graphical User Interfaces) to which the above-described user interface processing is applied.

### <Example 1>

In an example 1, the above user interface processing is applied to channel selection processing for receiving a user selection of a broadcast channel.

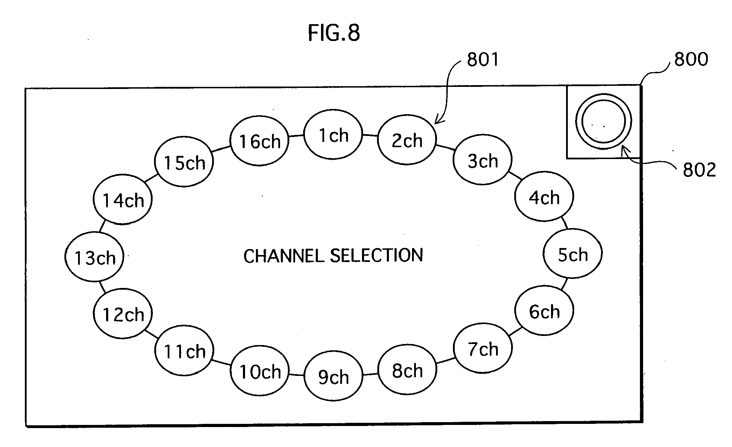

FIG. 8 shows an exemplary channel selection screen displayed on the display device 2 by the STB 1.

The screen 800 displays an option group 801 composed of annularly arranged option items which in this example are channel numbers. In addition, the screen 800 displays an operation window 802 graphically representing a point and trace of where a user touched the operating member 41.

Data and a control program used for the channel selection processing are stored in the HDD 23 of the STB 1. The data includes a table associating individual pieces of angular information with processes to be performed. The data also includes a table associating individual amounts of angular change with processes to be performed.

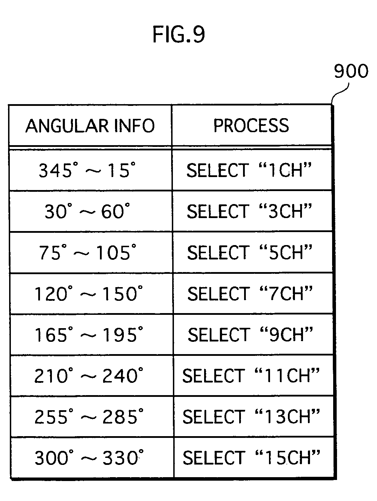

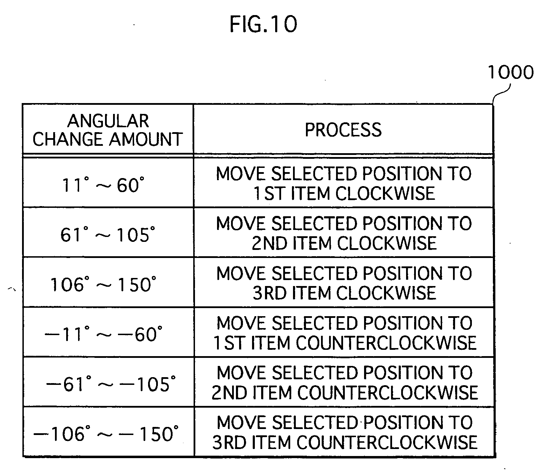

FIG. 9 shows the table associating individual pieces of angular information with processes to be performed. FIG. 10 shows the table associating individual amounts of angular change with processes to be performed.

According to the table 900 shown in FIG. 9, the angular information indicating an angle from 345° to 15° is associated with a process of selecting a channel "1ch". Similarly, the angular information indicating an angle from 30° to 60° is associated with a process of selecting a channel "3ch". The angular information indicating an angle from 75° to 105° is associated with a process of selecting a channel "5ch". The angular information indicating an angle from 120° to 150° is associated with a process of selecting a channel "7ch". The angular information indicating an angle from 165° to 195° is associated with a process of selecting a channel "9ch". The angular information indicating an angle from 210° to 240° is associated with a process of selecting a channel "11ch". The angular information indicating an angle from 255° to 285° is associated with a process of selecting a channel "13ch" . Finally, the angular information indicating an angle from 300° to 330° is associated with a process of selecting a channel "15ch".

According to the table 1000 shown in FIG. 10, the amount of angular change within a range of 11° to 60° is associated with a process of moving a selected position to the first item clockwise. Similarly, the amount of angular change within a range of 61° to 105° is associated with a process of moving the selected position to the second item clockwise. The amount of angular change within a range of 106° to 150° is associated with a process of moving the selected position to the third item clockwise. The amount of angular change within a range of -11° to -60° is associated with a process of moving the selected position to the first item counterclockwise. The amount of angular change within a range of -61° to -105° is associated with a process of moving the selected position to the second item counterclockwise. Finally, the amount of angular change within a range of -106° to -150° is associated with a process of moving the selected position to the third item counterclockwise.

When the judgment on the amount of angular change shows that the user input operation is a directional operation, the STB 1 refers to the table 900 to select a broadcast channel associated with a respective piece of angular information. On the other hand, when the judgment shows that the user input operation is a rotational operation, the STB 1 refers to the table 1000 to move the selected position in the direction and amount associated with the amount of angular change.

As is seen from the table 900, each pieces of angular information is associated with an odd-numbered channel. Thus, an even-numbered channel is not directly selectable with a single operation. To select an even-numbered channel, a nearby odd-numbered channel is first selected with a directional operation, and then the even-numbered channel is selected with a rotational operation.

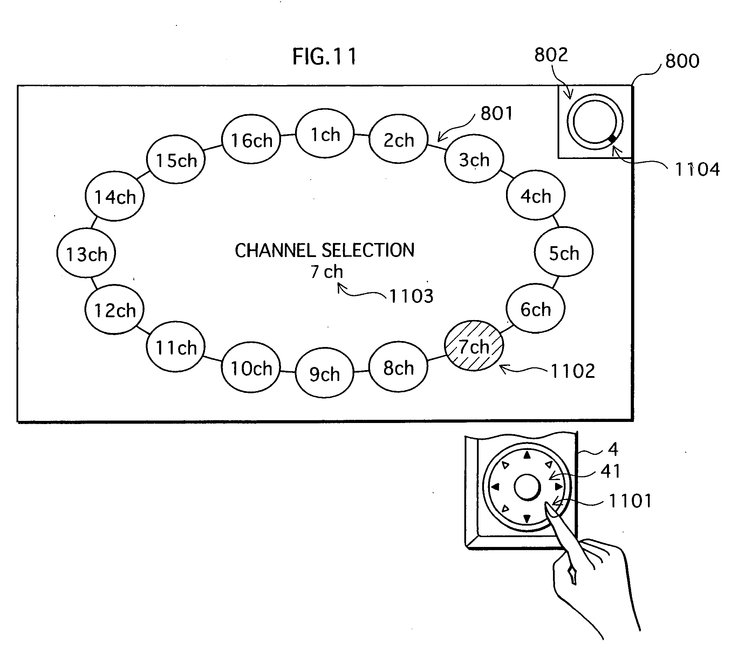

Suppose, for example, a user desires to select the channel 8ch. In this case, the user makes a directional operation as shown in FIG. 11 by touching a point 1101 on the operating member 41, located generally in a direction of 135° with respect to the center of the main surface.

In response to the above directional operation, the remote controller 4 transmits a controller code that includes angular information indicating an angle of 136°. Upon receipt of the controller code, the STB 1 performs a process associated in the table 900 with an angle from 120° to 150°, so that the channel "7ch" is selected.

At this time, the STB 1 displays a touch point 1104 in the operation window 802. In addition, the STB 1 displays a selected position 1102 (shaded area), so that a currently selected option item is presented in a different mode to be visually distinguished from the other option items. The STB 1 also displays the text "7ch", which is the currently selected channel, at a location pointed by an arrowed line 1103.

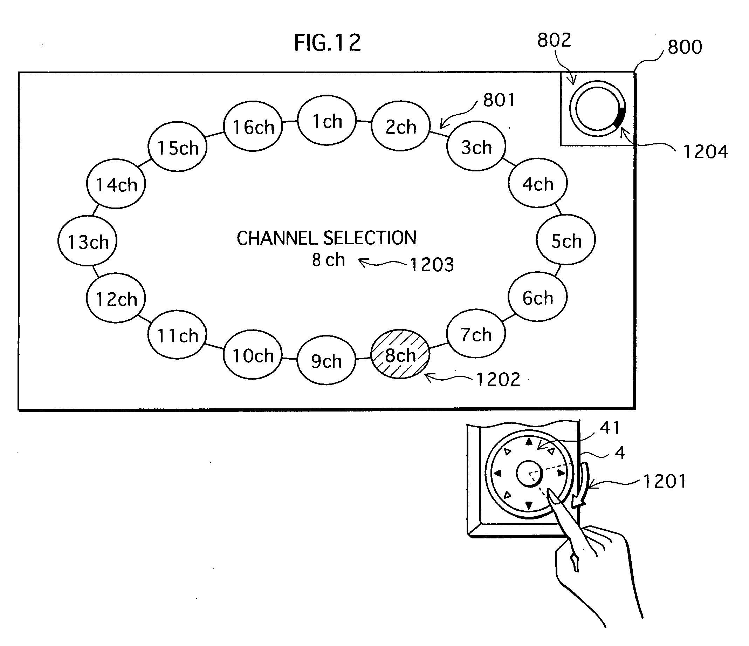

Next, as indicated by an arrow 1201 shown in FIG. 12, the user makes a rotational operation by sliding his finger clockwise over the main surface of the operating member 41. In response to the above rotational operation, the STB 1 receives one or more controller codes within the predetermined time period from the previous remote control operation received in response to the directional operation. The last received controller code includes angular information which shows the amount of angular change of +50°, so that the condition 10° < |Amount of Angular Change| < 160° is satisfied. Consequently, the STB 1 performs a process associated with the amount of angular change within a range of 11 to 60°, so that the selected position is "moved to the first option item clockwise".

That is, the STB 1 performs a display process of moving the selected position 1202 among the option group 801, from the option item corresponding to the channel "7ch" to the option item corresponding to the channel "8ch".

At this time, the STB 1 also displays a trace 1204 in the operation window, and also the text "8ch", which is the currently selected channel, at the center of the annularly arranged option items of the option group 801, pointed by an arrowed line 1203.

As set forth above, by applying the user interface processing to channel selection processing, users are allowed to quickly select a desired channel even if there are a number of channels.

### <Example 2>

In an example 2, the above user interface processing is applied to menu selection processing for receiving a user selection of a menu item.

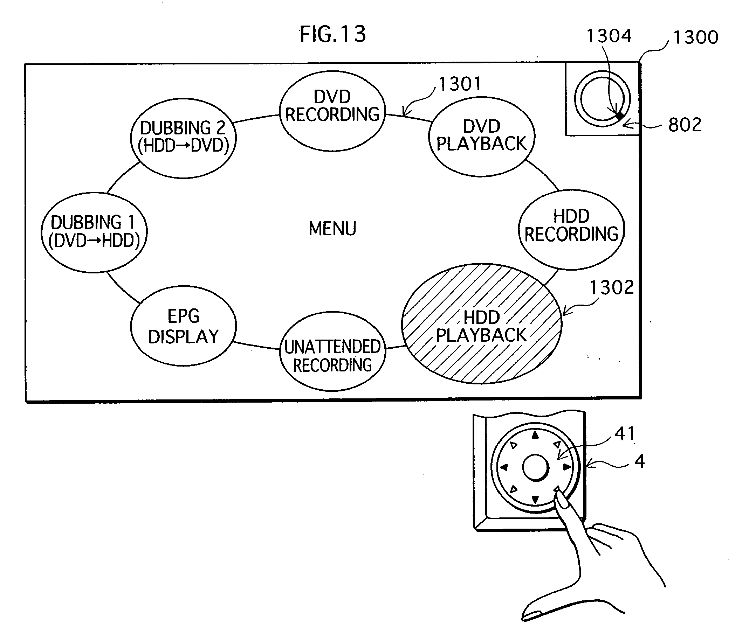

FIG. 13 shows an exemplary GUI screen used for receiving menu selection displayed on the display device 2 by the STB 1.

The GUI screen 1300 displays an option group 1301 composed of menu items arranged in an annular array. In addition, the GUI screen 1300 displays an operation window 802 which is identical to the operation window described in the example 1.

Data and a control program used for the menu selection processing are stored in the HDD 23 of the STB 1 . The data includes a table associating individual pieces of angular information with processes to be performed. The data also includes a table associating individual amounts of angular change with processes to be performed.

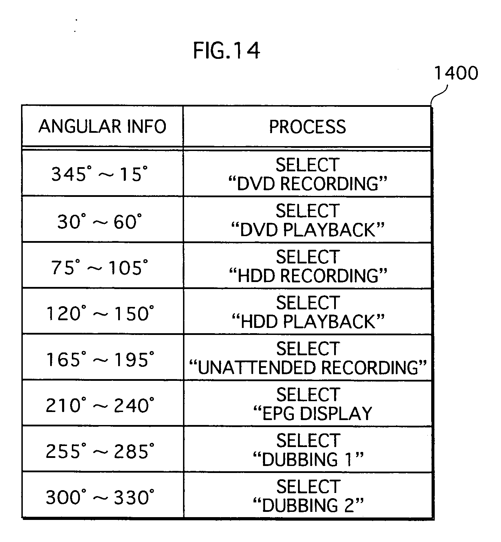

FIG. 14 shows the table associating individual pieces of angular information with processes to be performed in the example 2. The other table, which associates individual amounts of angular change with processes to be performed in the example 2, is identical to the table 1000 described in the example 1.

According to the table 1400 shown in FIG. 14, the angular information indicating an angle from 345° to 15° is associated with a process of selecting a menu item "DVD Recording". Similarly, the angular information indicating an angle from 30° to 60° is associated with a process of selecting a menu item "DVD Playback". The angular information indicating an angle from 75° to 105° is associated with a process of selecting a menu item "HDD Recording". The angular information indicating an angle from 120° to 150° is associated with a process of selecting a menu item "HDD Playback". The angular information indicating an angle from 165° to 195° is associated with a process of selecting a menu item "Unattended Recording". The angular information indicating an angle from 2100° to 240° is associatedwith a process of selecting a menu item "EPG (Electronic Program Guide) Display". The angular information indicating an angle from 255° to 285° is associated with a process of selecting a menu item "Dubbing 1". Finally, the angular information indicating an angle from 300° to 330° is associated with a process of selecting a menu item "Dubbing 2".

Suppose, for example, the menu item "HDD Playback" needs to be selected as shown in FIG. 13. The menu item "HDD Playback" is selected by touching, with a finger, the operating member 41 at a point located generally in the direction of 135° with respect to the center of the main surface.

At this time, the STB 1 displays the touch point 1304 at a corresponding location on the ring displayed in the operating window 802, and also displays the selected item 1302 in a larger size.

Suppose, for example, the selected position needs to be moved from the currently selected item 1302 to the next item "Unattended Recording" in a clockwise direction. Such movement of the selected position is made with a rotational operation for an amount of 11° to 60° or alternatively with a directional operation made by touching, with a finger, a point on the operating member 41 generally located in the direction of 180° with respect to the center of the main surface.

As described above, any menu item is selectable with either of a directional operation and a rotational operation. That is, a user is allowed to select a desired menu item with whichever operation is easier for the user.

### <Example 3>

In an example 3, the above user interface processing is applied to processing for unattended recording schedule setting.

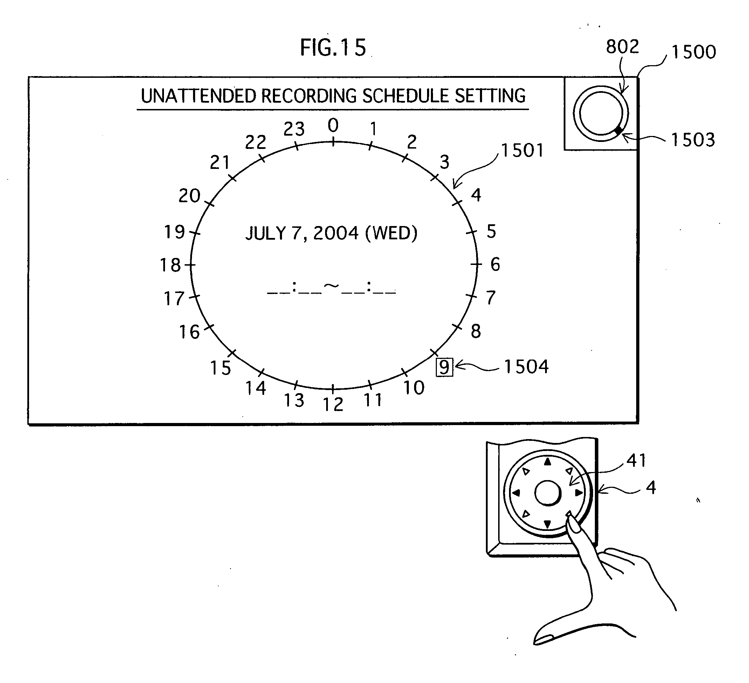

FIG. 15 shows an exemplary recording schedule setting screen displayed on the display device 2 by the STB 1.

The screen 1500 displays an option group 1501 composed of annularly arranged option items, which in this example are numerals 0 to 23 indicating a digit of time. In addition, the screen 1500 displays the operation window 802.

Data and a control program used for the recording schedule setting are stored in the ROM 20 of the STB 1. The data includes a table associating individual pieces of angular information with processes to be performed. The data also includes a table associating individual amounts of angular change with processes to be performed.

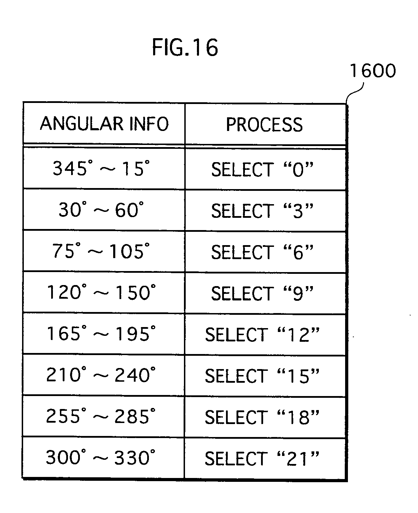

FIG. 16 shows the table associating pieces of angular information and processes to be performed in the example 3. The other table, which associates individual amounts of angular change with processes to be performed in the example 3, is identical to the table 1000 described in the example 1.

According to the table 1600 shown in FIG. 16, the angular information indicating an angle from 345° to 15° is associated with a process of selecting the numeral "1". Similarly, the angular information indicating an angle from 30° to 60° is associated with a process of selecting the numeral "3". The angular information indicating an angle from 75° to 105° is associated with a process of selecting the numeral "6". The angular information indicating an angle from 120° to 150° is associated with a process of selecting the numeral "9". The angular information indicating an angle from 165° to 195° is associated with a process of selecting the numeral "12". The angular information indicating an angle from 210° to 240° is associated with a process of selecting the numeral "15". The angular information indicating an angle from 255° to 285° is associatedwith a process of selecting the numeral "18". Finally, the angular information indicating an angle from 300° to 330° is associated with a process of selecting the numeral "21".

As shown in FIG. 15, the numeral "9" is selected with a touch of the operating member 41 at a point located generally in the direction of 135° with respect to the center of the main surface.

At this time, the STB 1 displays a touch point 1503 at a corresponding location on the ring displayed in the operating window 802, and also displays the selected numeral "9" within a square 1504 which is a graphical representation of the selected position.

Further, the selected position is moved from the currently selected numeral "9" to the numeral "11", which is the second item in a clockwise direction, by making a rotational operation for an amount of 61° to 105°.

### <Example 4>

In an example 4, the above user interface processing is applied to text input processing.

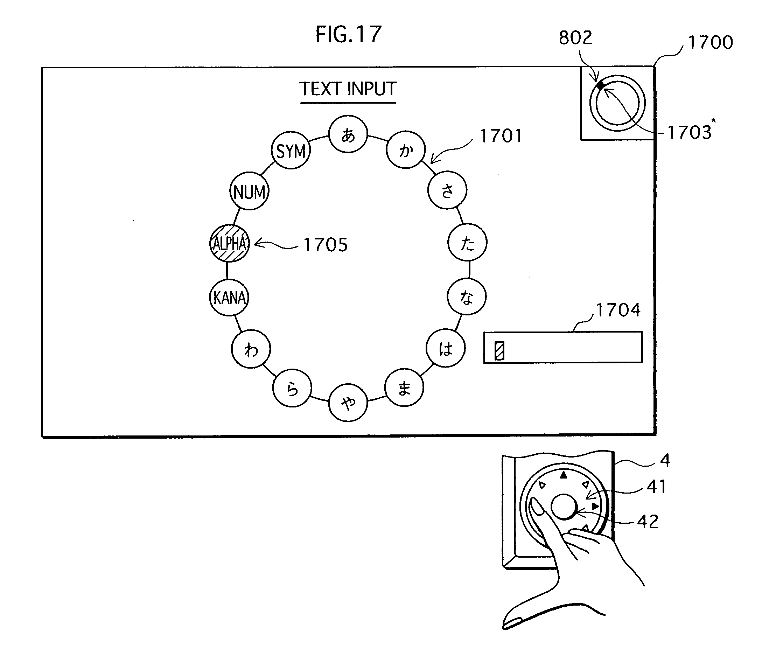

FIG. 17 shows an exemplary text input screen displayed on the display device 2 by the STB 1.

The screen 1700 displays an option group 1701 composed of annularly arranged option items, which in this example are a set of letters and characters. In addition, the screen 1700 displays the operation window 802 and a text input window 1703.

Data and a control program used for the text input processing are stored in the DVD 7. The data includes a table associating individual pieces of angular information with processes to be performed. The data also includes a table associating individual amounts of angular change with processes to be performed.

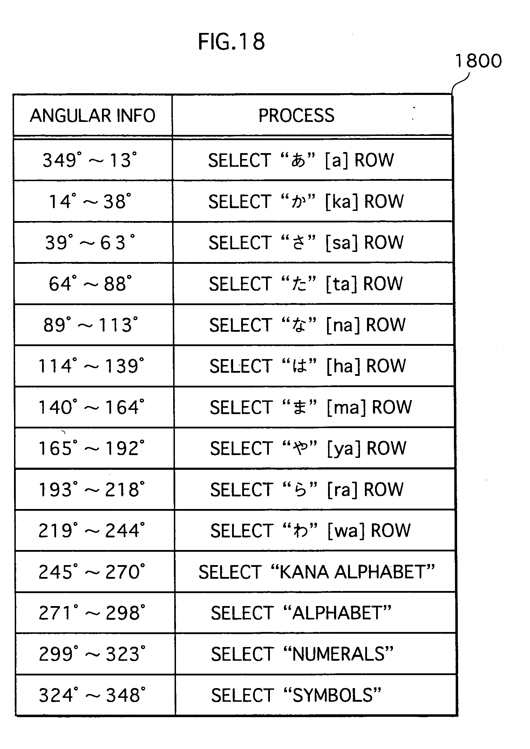

FIG. 18 shows the table associating individual pieces of angular information and processes to be performed in the example 4. The other table, which associates individual amounts of angular change with processes to be performed in the example 4, is identical to the table 1000 described in the example 1.

According to the table 1800 shown in FIG. 18, the angular information indicating an angle from 349° to 13° is associated with a process of selecting the row of Japanese alphabet [a]. Similarly, the angular information indicating an angle from 14° to 38° is associated with a process of selecting the row of Japanese alphabet [ka]. The angular information indicating an angle from 39° to 63° is associated with a process of selecting the row of Japanese alphabet [sa]. The angular information indicating an angle from 64° to 88° is associated with a process of selecting the row of Japanese alphabet [ta]. The angular information indicating an angle of 89° to 113° is associated with a process of selecting the row of Japanese alphabet [na]. The angular information indicating an angle of 114° to 139° is associated with a process of selecting the row of Japanese alphabet [ha]. The angular information indicating an angle of 140° to 164° is associated with a process of selecting the row of Japanese alphabet [ma]. The angular information indicating an angle of 165° to 192° is associated with a process of selecting the row of Japanese alphabet [ya]. The angular information indicating an angle of 193° to 218° is associated with a process of selecting the row of Japanese alphabet [ra]. The angular information indicting an angle of 219° to 244° is associated with a process of selecting the row of Japanese alphabet [wa]. The angular information indicating an angle of 245° to 270° is associated with a process of selecting "Kana", which is another set of Japanese alphabet. The angular information indicating an angle of 271° to 298° is associated with a process of selecting "Alphabet", which simply means the English alphabet. The angular information indicating an angle of 299° to 323° is associated with a process of selecting "Numerals. Finally, the angular information indicating an angle of 324° to 348° is associated with a process of selecting "Symbols".

As shown in FIG. 17, the "Alphabet" is selected with a touch of the operating member 41 at a point located generally in the direction of 280° with respect to the center of the main surface.

At this time, the STB 1 displays a touch point 1703 at a corresponding location on the ring displayed in the operating window 802. In addition, the STB 1 displays a selected position 1705 (shaded area), so that a currently selected option item, which in this example is "Alphabet", is presented in a different mode to be visually distinguished from the other option items.

The selected position is moved from the currently selected item of "Alphabet" to "Symbol", which is the second item in a clockwise direction, by making a rotational operation for an amount of 61° to 105°.

Note, with a touch of the operating member 42 while the "Alphabet" is in the selected state, the display is altered to present another option group composed of the twenty six letters of alphabet in an annular array. When a user selects one of the letters, the thus selected letter is entered. Alternatively, with a touch of the operating member 42 while the [a] row is in the selected state, the display is altered to present another option group composed of the annularly arranged five letters of the row, which are [a], [i], [u], [e], and [o]. When a user selects one of the letters, the thus selected letter is entered.

### <Example 5>

In an example 5, the above user interface processing is applied to drag-and-drop processing.

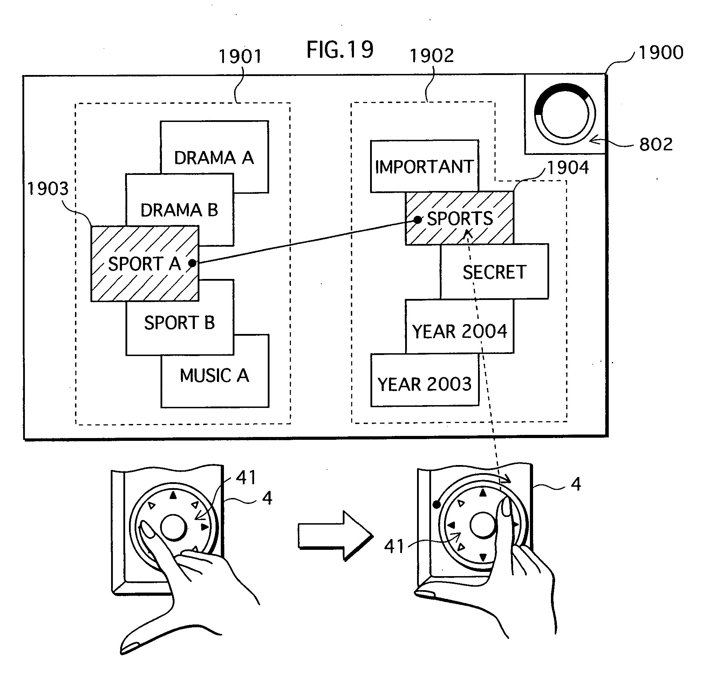

FIG. 19 shows an exemplary GUI screen displayed on the display device 2 by the STB 1 . The GUI screen is used for dragging and dropping a file into a folder.

The screen 1900 displays a group 1901 of files, a group 1902 of folders, and the operating window 802.

Data and a control program used for the drag-and-drop processing are stored in the HDD 23. The data includes a table associating individual pieces of angular information with processes to be performed. The data also includes a table associating individual amounts of angular change with processes to be performed.

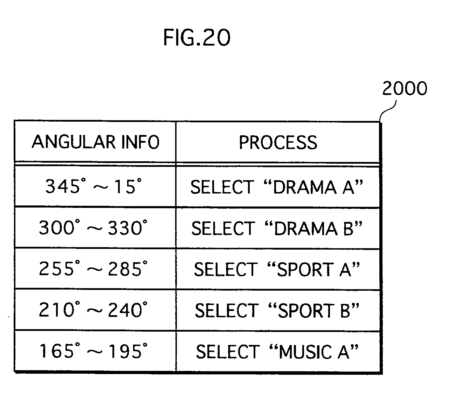

FIG. 20 shows the table associating individual pieces of angular information with processors to be performed in the example 5. The other table, which associates individual amounts of angular change with processes to be performed in the example 5, is identical to the table 1000 described in the example 1.

According to the table 2000 shown in FIG. 20, the angular information indicating an angle from 345° to 15° is associated with a process of selecting a file named "Drama A". Similarly, the angular information indicating an angle from 300° to 330° is associated with a process of selecting a file named "Drama B". The angular information indicating an angle from 255° to 285° is associated with a process of selecting a file named "Sport A". The angular information indicating an angle from 210° to 240° is associated with a process of selecting a file named "Sport B". Finally, the angular information indicating an angle from 165° to 195° is associated with a process of selecting a file named "Music A".

Suppose, for example, the file 1903 named "Sport A" needs to be moved into a folder 1904 named "Sports" by dragging and dropping. To this end, a user first selects the file 1903 by touching the operating member 41 at a point substantially in the direction of the angle of 270° with respect to the center of the main surface. Subsequently, the user makes a clockwise rotational operation for an amount of about 61° to 105°. In response to the subsequent operation, the selected file 1903 is moved via dragging and dropping into the folder 1904, which is the second folder from the top in the folder group 1902.

### <Example 6>

In an example 6, the above user interface processing is applied to a PIN (Personal Identification Number) input processing.

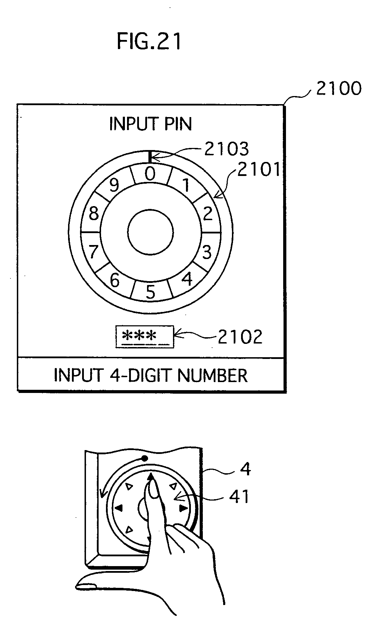

FIG. 21 shows an exemplary PIN input screen displayed on the display device 2 by the STB 1.

The screen 2100 displays a dial 2101 on which numerals used to input a PIN are annually arranged. In addition, the screen 2100 displays a PIN input window 2102 and a match mark 2103 pointing an indexing position.

Data and a control program used for the PIN input processing are stored in the HDD 23.

According to the present example, the numerals of the dial 2101 displayed on the screen 2100 appear as if they are associated with corresponding locations on the main surface of the operating member 41. In fact, however, there is no such association at all. Regardless of where on the operating member 41 a user touches, the STB 1 simply displays an asterisk "*" in the PIN input window 2101 without involving any numerical input. That is, the STB 1 simply discards any user operation of touching the operating member 41. This arrangement is one measure to make it difficult for a third party to input PIN.

Indeed, to input a PIN a rotational operation needs to be made to the operating member 41. A digit of PIN is input with a rotational operation to turn the dial 2101 and place an intended numeral at the location of matchmark 2103.

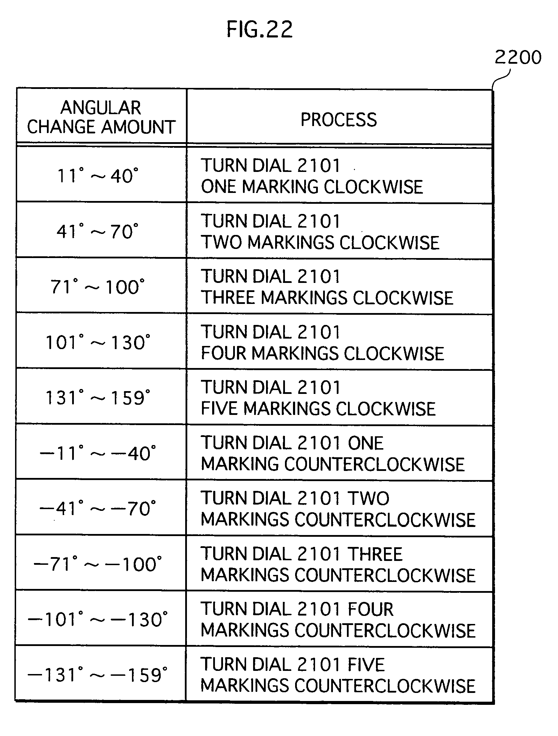

FIG. 22 is a table associating individual amounts of angular change with processes to be performed in the example 6. According to the table 2200 shown in FIG. 22, the amount of angular change within a range of 11° to 40° is associated with a process of turning the dial 2101 one marking clockwise. Similarly, the amount of angular change within a range of 41° to 70° is associated with a process of turning the dial 2101 two markings clockwise. The amount of angular change within a range of 71° to 100° is associated with a process of turning the dial 2101 three markings clockwise. The amount of angular change within a range of 101° to 130° is associated with a process of turning the dial 2101 four markings clockwise. The amount of angular change within a range of 131° to 159° is associated with a process of turning the dial 2101 five markings clockwise. The amount of angular change within a range of -11° to -40° is associated with a process of turning the dial 2101 one marking counterclockwise. The amount of angular change within a range of -41° to -70° is associated with a process of turning the dial 2101 two markings counterclockwise. The amount of angular change within a range of -71° to -100° is associated with a process of turning the dial 2101 three markings counterclockwise. The amount of angular change within a range of -101° to -130° is associated with a process of turning the dial 2101 four markings counterclockwise. Finally, the amount of angular change within a range of -131° to -159° is associated with a process of turning the dial 2101 five markings counterclockwise.

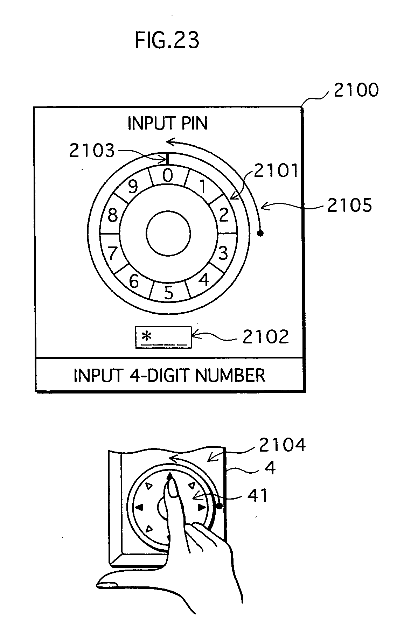

To input the numeral "3", for example, a user makes a rotational operation to the operating member 41 by sliding his finger over the main surface for an amount of about 90°, as indicated by an arrow 2104 shown in FIG. 23. In response to the rotational operation, the STB 1 receives an input of the numeral "3" and rotates the image of dial 2101 displayed on the screen 2100 in a direction of an arrow 2105 until the numeral "3" comes to the location of the matchmark 2103. In addition, the STB 1 displays an asterisk in the PIN input widow 2102.

### <Example 7>

In an example 7, the above user interface processing is applied to input processing for content payback control.

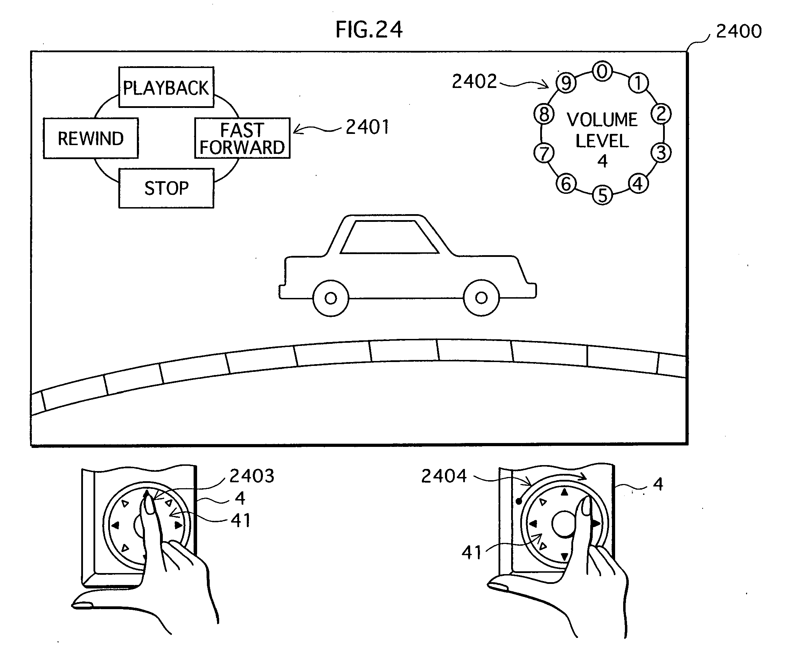

FIG. 24 shows an exemplary content playback screen displayed on the display device 2 by the STB 1.

The screen 2400 is produced by overlaying GUI components 2401 and 2402 on a screen of content playback.

The GUI component 2401 represents four available instructions of "Playback", "Stop", "First Forward", and "Rewind". Further, the GUI component 2401 is associated with four directional inputs of up, down, right, and left made to the operating member 41.

The other GUI component 2402 represents audio output levels of content playback, and is associatedwith rotational operations made to the operating member 41 by sliding a user's finger over the main surface.

Data and a control program used for the playback control input processing are stored in the HDD 23. The data includes a table associating individual pieces of angular information with processes to be performed. The data also includes a table associating individual amounts of angular change with processes to be performed.

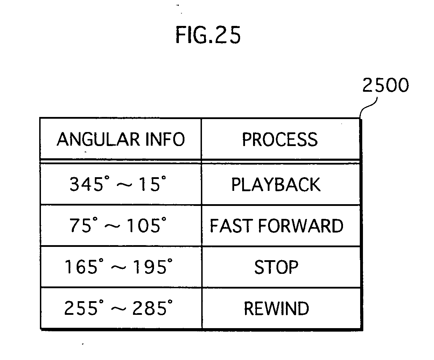

FIG. 25 shows the table associating individual pieces of angular information with processes to be performed in the example 7. FIG: 26 shows the table associating individual amounts of angular change with processes to be performed in the example 7.

According to the table 2500 shown in FIG. 25, the angular information indicating an angle from 345° to 15° is associated with a "Playback" process. Similarly, the angular information indicating an angle of 75° to 105° is associated with a "First Forward" process. The angular information indicating an angle from 165° to 195° is associated with a "Stop" process. Finally, the angular information indicating an angle of 255° to 285° is associated with a process of "Rewind".

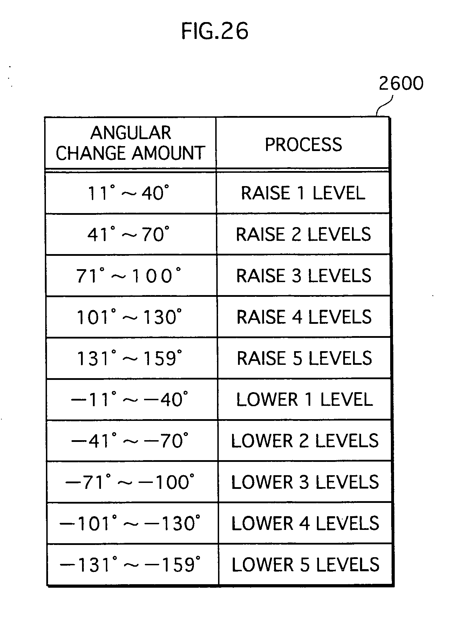

According to the table 2600 shown in FIG. 26, the amount of angular change within a range of 11° to 40° is associated with a process of raising the audio output level by one. Similarly, the amount of angular change within a range of 41° to 70° is associated with a process of raising the audio output level by two. The amount of angular change within a range of 71° to 100° is associated with a process of raising the audio output level by three. The amount of angular change within a range of 101° to 130° is associated with a process of raising the audio output level by four. The amount of angular change within a range of 131° to 159° is associated with a process of raising the audio output level by five. The amount of angular change within a range of-11° to-40° is associated with a process of lowering the audio output level by one. The amount of angular change within a range of -41° to -70° is associated with a process of lowering the audio output level by two. The amount of angular change within a range of -71° to -100° is associatedwith a process of lowering the audio output level by three. The amount of angular change within a range of -101° to -130° is associated with a process of lowering the audio output level by four. Finally, the amount of angular change within a range of -131° to-159° is associated with a process of lowering the audio output level by five.

Upon receipt of a user input operation, the STB 1 judges whether the operation is a directional operation or a rotational operation. In the former case, the STB 1 refers to the table 2500 to accordingly perform one of the "Playback", "Stop", "Fast Forward", and "Rewind" processes. In the latter case, the STB 1 refers to the table 2600 to accordingly adjust the audio output level.

For example, to instruct the STB 1 to play back content, a user makes a directional operation by touching the operating member 41 at a point 2403 located substantially in the direction of 0° with respect to the center of the main surface. In response, the STB 1 selects the "Playback" process, so that the content is played.

For example, when a user makes a rotational operation by sliding his finger over the main surface of the operating member 41 for an amount of about 110° in the direction of an arrow 2404 shown in FIG. 24, the STB 1 raises the level of audio output by four and produces audio output at that level.

### <Example 8>

In an example 8, the above user interface processing is applied to input processing of content playback control, which is different from the processing described in the example 7.

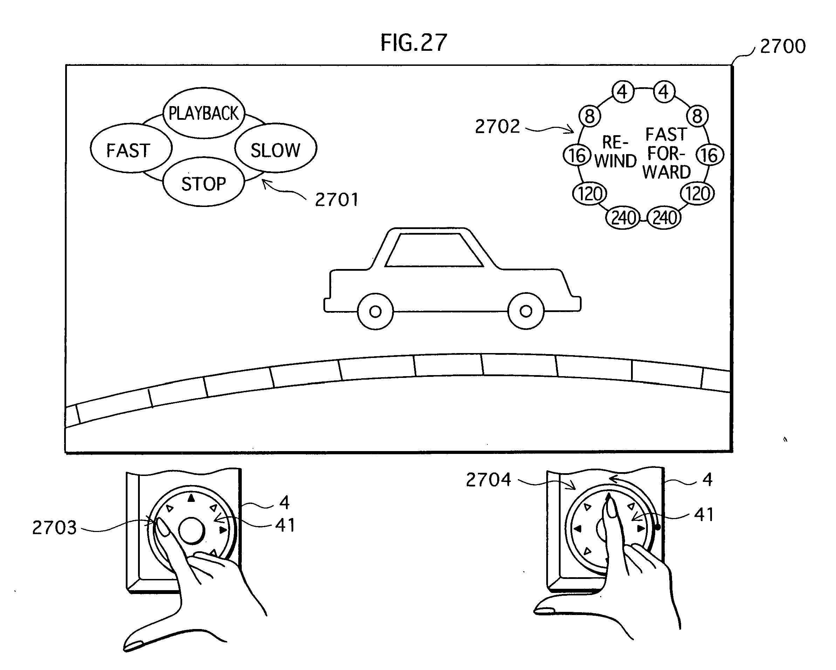

FIG. 27 shows an exemplary content playback screen displayed on the display device 2 by the STB 1.

The screen 2700 is produced by overlaying GUI components 2701 and 2702 on a screen of content playback.

The GUI component 2701 represents four available instructions of "Playback", "Stop", "First Playback", and "Slow Playback". Further, the GUI component 2701 is associated with four directional inputs of up, down, right, and left made to the operating member 41.

The other GUI component 2702 represents speed levels of fast forwarding and rewinding of content, and is associated with rotational operations made to the operating member 41 by sliding a user's finger over the main surface.

Data and a control program used for the playback control input processing are stored in the HDD 23. The data includes a table associating individual pieces of angular information with processes to be performed. The data also includes a table associating individual amounts of angular change with processes to be performed.

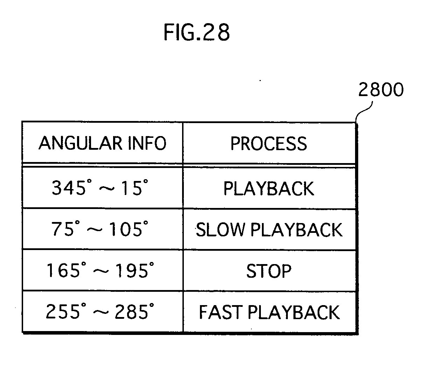

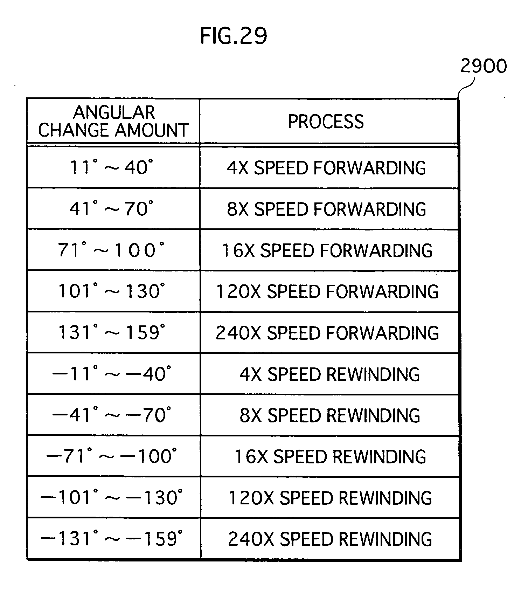

FIG. 28 shows the table associating individual pieces of angular information with processes to be performed in the example 8. FIG. 29 shows the table associating individual amounts of angular change with processes to be performed in the example 8.

According to the table 2800 shown in FIG. 28, the angular information indicating an angle from 345° to 15° is associated with a "Playback" process. Similarly, the angular information indicating an angle of 75° to 105° is associated with a "Slow Playback" process. The angular information indicating an angle from 165° to 195° is associated with a "Stop" process. Finally, the angular information indicating an angle of 255° to 285° is associated with a process of "Fast Playback".

According to the table 2900 shown in FIG. 29, the amount of angular change within a range of 11° to 40° is associated with a process of forwarding content at quadruple (4x) speed. Similarly, the amount of angular change within a range of 41° to 70° is associated with a process of forwarding content at octuple (8x) speed. The amount of angular change within a range of 71° to 100° is associated with a process of forwarding content at 16 times (16x) speed. The amount of angular change within a range of 101° to 130° is associated with a process of forwarding content at 120 times (120x) speed. The amount of angular change within a range of 131° to 159° is associated with a process of forwarding content at 240 (240x) times speed. The amount of angular change within a range of -11° to -40° is associated with a process of rewinding content at quadruple (4x) speed. The amount of angular change within a range of -41° to -70° is associated with a process of rewinding content at octuple (8x) speed. The amount of angular change within a range of -71° to -100° is associated with a process of rewinding content at 16 times (16x) speed. The amount of angular change within a range of -101° to -130° is associated with a process of rewinding content at 120 times (120x) speed. Finally, the amount of angular change within a range of -131° to -159° is associated with a process of rewinding content at 240 times (240x) speed.

Upon receipt of a user input operation, the STB 1 judges whether the operation is a directional operation or a rotational operation. In the former case, the STB 1 refers to the table 2800 to accordingly perform one of the "Playback", "Stop", "Fast Playback", and "Slow Playback" processes. In the latter case, the STB 1 refers to the table 2900 to accordingly forward or rewind content at a speed associated with the amount of angular change.

For example, to instruct the STB 1 to perform fast playback of content, a user makes a directional operation by touching the operating member 41 at a point 2703 located substantially in the direction of 270° with respect to the center of the main surface. In response, the STB 1 selects the "Fast Playback" process, so that the content is played at a higher speed than normal playback.

For example, when a user makes a rotational operation by sliding his finger over the main surface of the operating member 41 for an amount of about 90° in the direction of an arrow 2704 shown in FIG. 27, the STB 1 rewinds the currently played content at 16 times speed.

### <Example 9>

In an example 9, the above user interface processing is applied to EPG display processing.

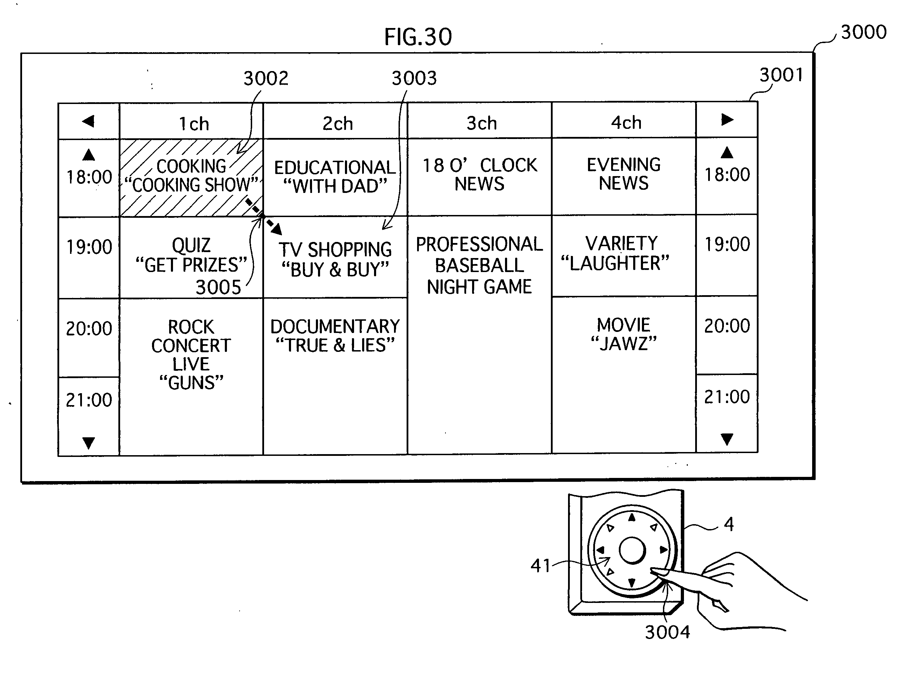

FIG. 30 shows an exemplary EPG screen displayed on the display device 2 by the STB 1.

The screen 3000 displays an EPG 3001 which is a chart composed of cells each representing a broadcast program. In addition, the screen 3000 displays a selected position (shaded area) overlaid on a currently selected cell.

The selected position may be presented by displaying the currently selected cell within a thick line box or with a different background color, so that the currently selected cell is visibly distinguished form the other cells.

Data and a control program used for the EPG display processing are stored in the HDD 23. The data includes a table associating individual pieces of angular information with processes to be performed. The data also includes a table associating individual amounts of angular change with processes to be performed.

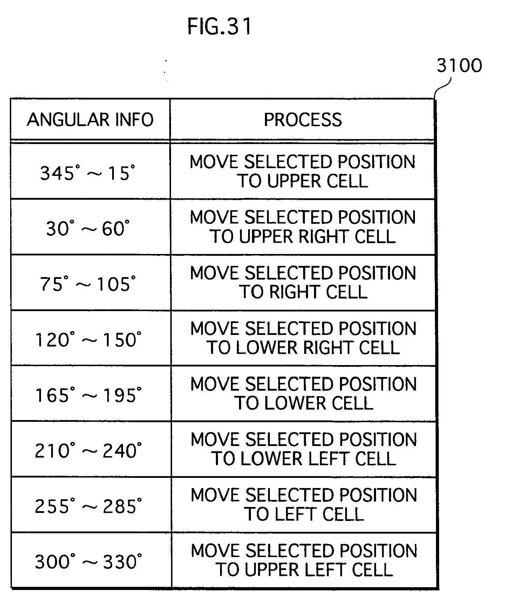

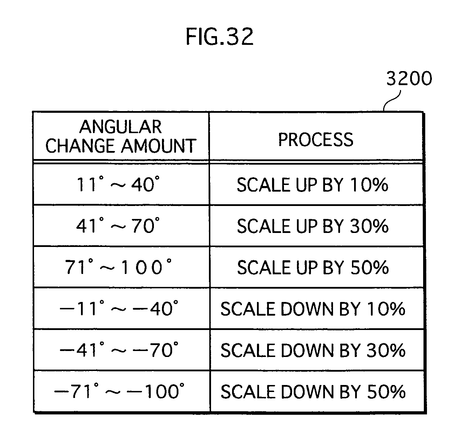

FIG. 31 shows the table associating individual pieces of angular information with processes to be performed in the example 9. FIG. 32 shows the table associating individual amounts of angular change with processes to be performed in the example 9.

According to the table 3100 shown in FIG. 31, the angular information indicating an angle from 345° to 15° is associated with a process of moving the selected position from the current cell to the upper cell. Similarly, the angular information indicating an angle from 30° to 60° is associated with a process of moving the selected position from the current cell to the upper right cell. The angular information indicating an angle from 75° to 105° is associatedwith a process of moving the selected position from the current cell to the right cell. The angular information indicating an angle from 120° to 150° is associated with a process of moving the selected position from the current cell to the lower right cell. The angular information indicating an angle from 165° to 195° is associated with a process of moving the selected position from the current cell to the lower cell. The angular information indicating an angle from 210° to 240° is associated with a process of moving the selected position from the current cell to the lower laft cell. The angular information indicating an angle from 255° to 285° is associated with a process of moving the selected position from the current cell to the left cell. Finally, the angular information indicating an angle from 300° to 330° is associated with a process of moving the selected position from the current cell to the upper left cell.

According to the table 3200 shown in FIG. 32, the amount of angular change within a range of 11° to 40° is associated with a process of scaling up the EPG display by 10%. Similarly, the amount of angular change within a range of 41° to 70° is associated with a process of scaling up the EPG display by 30%. The amount of angular change within a range of 71° to 100° is associated with a process of scaling up the EPG by 50%. The amount of angular change within a range of -11° to -40° is associated with a process of scaling down the EPG display by 10%. The amount of angular change within a range of -41° to -70° is associated with a process of scaling down the EPG display by 30%. Finally, the amount of angular change within a range of -71° to -100° is associated with a process of scaling down the EPG display by 50%.

Upon receipt of a user input operation, the STB 1 judges whether the operation is a directional operation or a rotational operation. In the former case, the STB 1 refers to the table 3100 to accordingly move the selected position. In the latter case, the STB 1 refers to the table 3200 to accordingly scale up or down the EPG 3001.

For example, to move the selected position from a currently selected cell 3002 to a cell 3003, a user makes a directional operation as shown in FIG. 30 by touching the operating member 41 at a point 3004 located substantially in the direction of 135° with respect to the center of the main surface. In response, the selected position is moved as indicated by an arrow 3005, from the cell 3002 to the cell 3005 located in the lower right direction from the cell 3002.

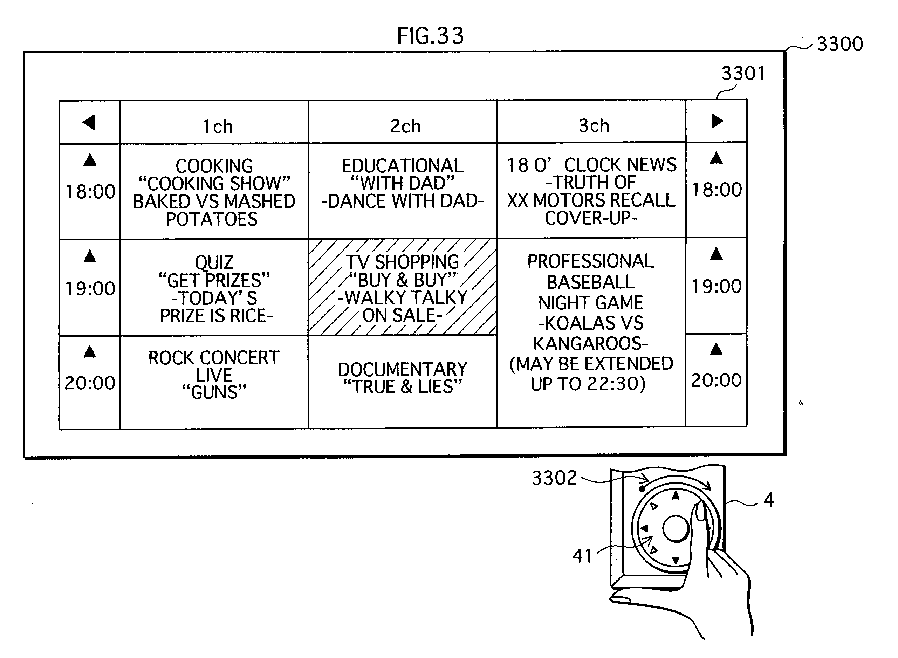

Suppose, a user makes a rotational operation as shown in FIG. 33, by sliding his finger over the main surface of the operating member 41 in the direction of an arrow 3302 for an amount of about 50°. In response to this rotational operation, the STB scales up the EPG display by 30% with the currently selected cell as the center. When the EPG is magnified, information previously omitted due to the limited size of display space is newly presented. Example of such extra information includes an overview of a respective broadcast program.

### <Example 10>

In an example 10, the above user interface processing is applied to map display processing.

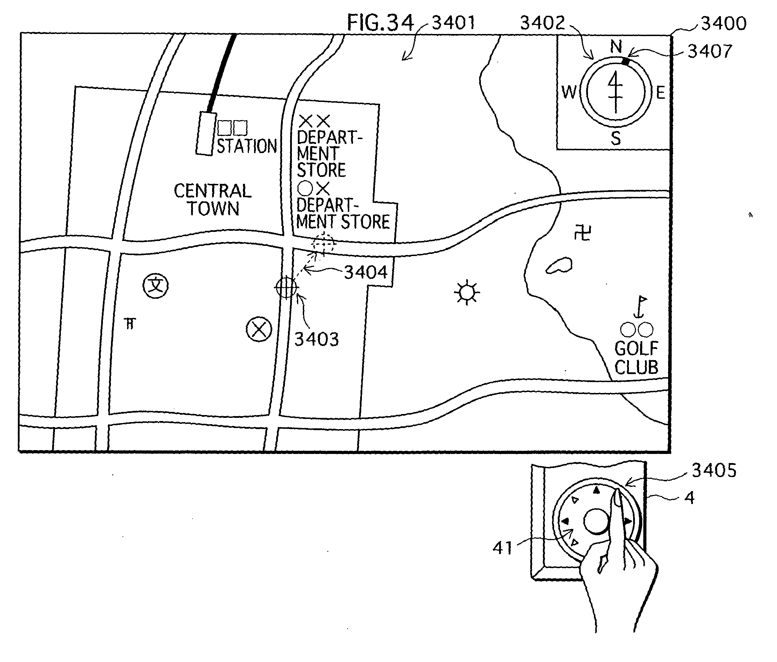

FIG. 34 shows an exemplary map screen displayed on the display device 2 by the STB 1.

The screen 3400 displays a map 3401 along with a cursor 3403. In addition, the screen 3400 displays an operating window 3402 graphically representing a point and trace of where a user touched the operating member 41, with respect to north, south, east and west.

Data and a control program for the map display processing are stored in the HDD 23. The data includes a table associating individual pieces of angular information with processes to be performed. The data also includes a table associating individual amounts of angular change with processes to be performed.

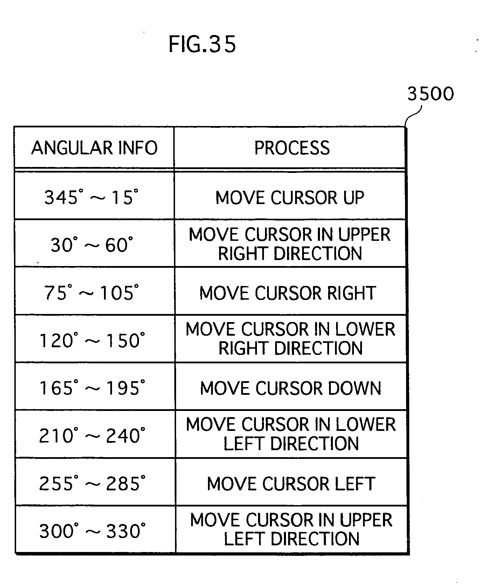

FIG. 35 shows the table associating individual pieces of angular information with processes to be performed in the example 10. The other table, which associates individual amounts of angular change with processes to be performed, is identical to the table 3200 described in the example 9.

According to the table 3500 shown in FIG. 35, the angular information indicating an angle from 345° to 15° is associated with a process of moving the cursor up. Similarly, the angular information indicating an angle from 30° to 60° is associated with a process of moving the cursor in the upper right direction. The angular information indicating an angle from 75° to 105° is associated with a process of moving the cursor to the right. The angular information indicating an angle from 120° to 150° is associated with a process of moving the cursor in the lower right direction. The angular information indicating an angle from 165° to 195° is associated with a process of moving the cursor down. The angular information indicating an angle from 210° to 240° is associated with a process of moving the cursor in the lower left direction. The angular information indicating an angle from 255° to 285° is associated with a process of moving the cursor to the left. Finally, the angular information indicating an angle from 300° to 330° is associated with a process of moving the cursor in the upper left direction.

Upon receipt of a user input operation, the STB 1 judges whether the operation is a directional operation or a rotational operation. In the former case, the STB 1 refers to the table 3500 to accordingly move the cursor. In the latter case, the STB 1 refers to the table 3200 to accordingly scale up or down the map 3401.

Suppose, for example, the cursor 3403 shown in FIG. 34 needs to be moved in the upper right direction as indicated by a dotted arrow 3404. To this end, a user makes a directional operation by touching the operating member 41 at a point 3405 located substantially in the direction of 45° with respect to the center of the main surface. In response, the cursor is moved in the upper right direction. In addition, a touch point 3407 is displayed at a corresponding location in the window 3402.

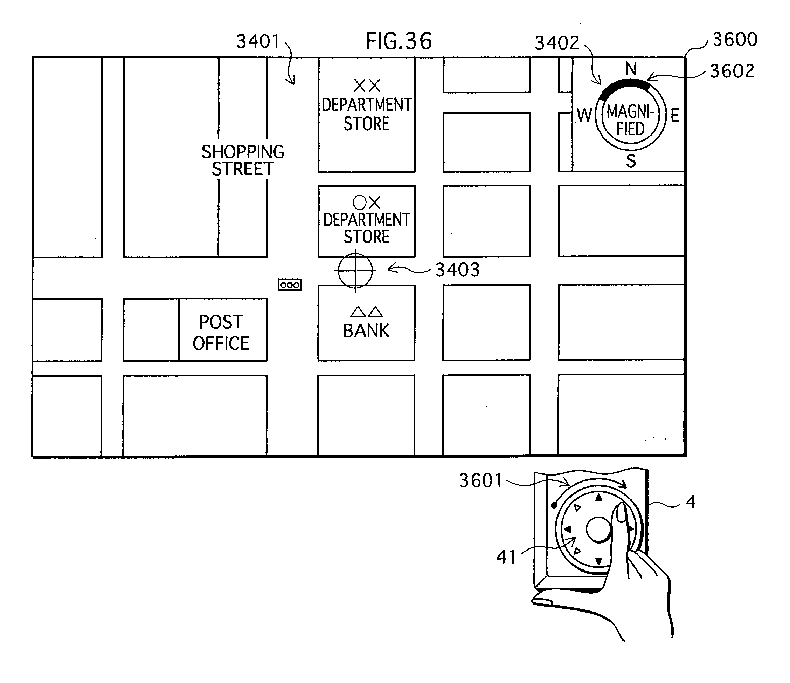

Suppose, a user makes a rotational operation as shown in FIG. 36, by sliding his finger over the main surface of the operating member 41 in the direction of an arrow 3601. In response to this operation, the map is scaled up by 50%, with the current location of the cursor 3403 as the center.

At this time, the operating window 3402 displays a trace 3602 on the ring. The trace represents the sliding operation made to the operating member 41 by the user. In addition, the operating window 3402 displays the text "magnified" at the center of the ring to indicate that the map is now being displayed at a larger scale.

### <Example 11>

In an example 11, the above user interface processing is applied to content selection processing for receiving a user selection of content recorded to the HDD 23.

FIG. 37 shows an exemplary content selection screen displayed on the display device 2 by the STB 1.

The screen 3700 displays an option group 3701 composed of spirally arranged eight option items, which in this example are content titles. In addition, the screen 3700 displays the operation window 802 graphically representing a point and trace of where a user touched the operating member 41.

Data and a control program used for the content selection processing are stored in the HDD 23. The data includes control information relating to contents stored in the HDD 23. The data also includes a table associating individual pieces of angular information with processes to be performed, and a table associating individual amounts of angular change with processes to be performed.

FIG. 38 shows exemplary control information relating to contents stored in the HDD 23. As shown in the figure, the control information 3800 shows the ranking of recorded contents.

Note that the option group displayed on the screen 3700 shown in FIG. 37 is an option group 1 composed of the titles of first to eighth ranked contents according to the control information 3800. An option group 2 is composed of titles of contents within a ranking range lower by one than the ranking range of the option group 1. That is, the option group 2 is composed of the titles of second to ninth ranked contents.

FIG. 39 shows the table associating individual pieces of angular information with processes to be performed in the example 11.

According to the table 3900 shown in FIG. 39, the respective pieces of angular information are associated with the contents constituting the option group 1 shown in FIG. 37. Specifically, the angular information indicating an angle from 345° to 15° is associated with a process of selecting a content title "News 9". The angular information indicating an angle from 30° to 60° is associated with a process of selecting a content title "Sports". The angular information indicating an angle from 75° to 105° is associated with a process of selecting a content title "Movie 1". The angular information indicating an angle from 120° to 150° are associated with a process of selecting a content title "Soap Opera". The angular information indicating an angle from 165° to 195° is associated with a process of selecting a content title "Drama 1". The angular information indicating an angle from210° to 240° is associated with a process of selecting a content title "Educational". The angular information indicating an angle from 255° to 285° is associated with a process of selecting a content title "Music". Finally, the angular information indicating an angle from 300° to 330° is associated with a process of selecting a content title "History".

FIG. 40 shows the table associating individual amounts of angular change with processes to be performed in the example 11.

According to the table 4000 shown in FIG. 40, the amount of angular change within a range of 11° to 40° is associated with a process of displaying an option group composed of titles of contents within a ranking range higher by one than the ranking range of the currently displayed contents. Similarly, the amount of angular change within a range of 41° to 70° is associated with a process of displaying an option group composed of titles of contents within a ranking range higher by two. The amount of angular change within a range of 71° to 100° is associated with a process of displaying an option group composed of titles of contents within a ranking range higher by three. The amount of angular change within a range of 101° to 130° is associated with a process of displaying an option group composed of titles of contents within a ranking range higher by four. The amount of angular change within a range of 131° to 159° is associated with a process of displaying an option group composed of titles of contents within a ranking range higher by five. The amount of angular change within a range of -11 to -40 is associated with a process of displaying an option group composed of titles of contents within a ranking range lower by one than the ranking range of the currently displayed contents. The amount of angular change within a range of -41° to -70° is associated with a process of displaying an option group composed of titles of contents within a ranking range lower by two. The amount of angular change within a range of -71° to -100° is associated with a process of displaying an option group composed of titles of contents within a ranking range lower by three. The amount of angular change within a range of -101° to -130° is associated with a process of displaying an option group composed of titles of contents within a ranking range lower by four. Finally, the amount of angular change within a range of -131° to -159° is associated with a process of displaying an option group composed of titles of contents within a ranking range lower by five.

Upon receipt of a user input operation, the STB 1 judges whether the operation is a directional operation or a rotational operation. In the former case, the STB 1 accordingly selects a specific content title. In the latter case, the STB 1 accordingly displays an option group composed of titles of contents falling within a ranking range shifted from the ranking range of the currently displayed option group.

Suppose, for example, a user makes a directional operation as shown in FIG. 37, by touching a point 3707 on the operation member 41 located substantially in the direction of 135° with respect to the center of the main surface. In response to this operation, the STB 1 refers to the table 3900 shown in FIG. 39 and accordingly selects the content title 3704 "Soap Opera". At this time, the STB 1 also displays a touch point 3705 at a corresponding location in the operating window 802. Further, the currently selected option item, i.e. the content title 3704 "Soap Opera", is displayed in a different mode from the other option items so as to be visibly distinguished.

Next, suppose that the user makes a rotational operation by sliding his finger, as indicated by an arrow 4101 shown in FIG. 41, over the main surface of the operating member 41 counterclockwise for an amount of about 30°. In response to this operation, the STB 1 refers to the table 4000 shown in FIG. 40 and accordingly displays an option group composed of titles of contents falling within a ranking range lower by one from the ranking range of the currently displayed option group. In other words, the option group 2 shown in FIG. 38 is displayed. The screen 3700 shown in FIG. 3 thus displays an option group 4100, as a result of shifting the respective content titles in the direction of an arrow 4102.

In addition, the operating window 802 displays on the ring a trance 4103 visually representing the rotational operation.

### <Example 12>

In an example 12, the above user interface processing is applied to a DJ game. The "DJ" of the DJ game stands for "Disk Jockey" who selects and plays pre-recorded music at places like a dance hall.

It is known that a DJ manually moves, as a performance, a vinyl record back and forth while the record is playing on a turntable in order to produce a so-called scratch sound. The scratch sound comes out as a result that a phonograph needle scratches the record. The DJ game is designed to simulate the performance.

FIG. 42 shows an exemplary DJ game screen displayed on the display device 2 by the STB 1.

The screen 4200 displays images of a vinyl record 4201 and buttons 4202-4205.

Data and a control program used for the DJ game are stored on the DVD 7. The data includes a table associating individual pieces of angular information with processes to be performed. The data also includes a table associating individual amounts of angular change with processes to be performed.

FIG. 43 shows the table associating individual pieces of angular information with processes to be performed in the example 12.

According to the table 4300 shown in FIG. 43, the angular information indicating an angle from 345° to 15° is associated with a process of producing a sound of "Drums". Similarly, the angular information indicating an angle from 75° to 105° is associated with a process of producing a sound of "Cymbals". The angular information indicating an angle from 165° to 195° is associated with a process of producing a "Sound Effect 1". Finally, the angular information indicating an angle from 255° to 285° is associated with a process of producing a "Sound Effect 2"

FIG. 44 shows the table associating individual amounts of angular change with processes to be performed in the example 12.

According to the table 4400 shown in FIG. 44, the amount of angular change within a range of 11° to 70° is associated with a process of producing a "Scratch Sound 1". Similarly, the amount of angular change within a range of 71° to 130° is associated with a process of producing a "Scratch Sound 2". The amount of angular change within a range of 131° to 159° is associated with a process of producing a "Scratch Sound 3". The amount of angular change within a range of -11° to -70° is associated with a process of producing a "Scratch Sound 4". The amount of angular change within a range of -71° to -130° is associated with a process of producing a "Scratch Sound 5". Finally, the amount of angular change within a range of -131° to -159° is associated with a process of producing a "Scratch Sound 6".

Upon receipt of a user input operation, the STB 1 judges whether the operation is a directional operation or a rotational operation. In the former case, the STB 1 accordingly produces the sound associated with the angular information. In the latter case, the STB 1 accordingly produces the scratch sound associated with the amount of angular change.

Suppose, for example, the usermakes a directional operation as shown in FIG. 42 by touching the operating member 41 at a point 4206 located substantially in the direction of 270° with respect to the center of the main surface. In response to the directional operation, the STB 1 refers to the table 4300 and accordingly produces the "Sound Effect 2".

Suppose, for example, a user makes a rotational operation, as indicated by an arrow 4207 shown in FIG. 41, by sliding his finger over the main surface of the operating member 41 counterclockwise for an amount of about 90°. In response to the rotational operation, the STB 1 refers to the table 4400 and accordingly produces the "Scratch Sound 2". In addition, the STB 1 rotates the image of vinyl record 4201 in a direction of an arrow 4208.

### <MODIFICATION>

Next, a description is given to a modification of the user interface processing according to the present invention.

According to a feature of the present invention, upon receipt of an input operation made to a single directional input device, it is judged whether the operation is a directional operation or a rotational operation and a process associated with a respective input operation is performed accordingly. Yet, it is possible that a wrong judgment is made on an input operation.

Considering the above undesirable possibility, an assumption is made that it is often the case where input operations of the same type (rotational operation or directional operation) are successively made. Based on this assumption, the modification of the present invention keeps from immediately executing any process if different types of input operations are successively made, such as the case where a rotational operation is made after a directional operation, and vice versa.

More specifically, in this modification, when a previously performed process is a first process and a process to be performed next is a second process, and vice versa, the STB determines a second process as a candidate process to be performed and keeps the count of such a determination. Each process is performed only when the determination count of the process reaches a predetermined number.

FIG. 45 is a flowchart illustrating the modified user interface processing, supplemental to the flowchart shown in FIG. 6.

First, it is judged whether the amount of angular change calculated in the step S8 shown in FIG. 6 satisfies the condition where 10° < |Amount of Angular Change| < 160°. If the condition is satisfied (step S9: YES), a step S12 is performed.

On the other hand, when the condition where 10° < |Amount of Angular Change| < 160° is not satisfied (step S9: NO), a step S18 is performed.

In the step S12, if it is judged that the previously performed process is a firstprocess (step S12:YES), a step S13 is performed.

On the other hand, if it is judged in the step S12 that the previously performed process is a second process (step S12: NO), a step S16 is performed.

In the step S13, if the current determination count has not reached the predetermined number (step S13: NO), a step S14 is performed.

In the step S13, on the other hand, if the determination count is equal to the predetermined number (step S13: YES), a step S16 is performed.

In the step S14, it is determined that a second process is a candidate process to be performed in response to the current input operation, and thus the determination count is incremented by one (step S15). Then, the processing goes back to the step S1.

In the step S16, the determination count is reset to zero, and a step S17 is performed.

In the step S17, the STB performs second processes associated with the respective amounts of angular change having been calculated for the determinations counted. The processing then goes back to the step S1.

If it is judged in the step S18 that the previously performed process is a second process (step S18: YES), a step S19 is performed.

If it is judged in the step S18 that the previous process is a first process (step S18: NO), a step S23 is performed.

In the step S19, if the current determination count has not reached the predetermined number (step S19: NO), a step S20 is performed.

In the step S19, on the other hand, if the current determination count is equal to the predetermined number (step S19: YES), a step S23 is performed.

In the step S20, it is determined that a first process is a candidate process to be performed in response to the current input operation, and thus the determination count is incremented by one (step S21). Then, the processing goes back to the step S1.

In the step S22, the determination count is reset to zero, and a step S23 is performed next.

In the step S23, the STB performs first processes associated with the respective pieces of angular information having been calculated for the determinations counted. Then, the processing goes back to the step S1.

### <SUPPLEMENTAL NOTE>

Up to this point, the present invention has been described by way of the embodiment pertinent to the STB 1. Yet, it should be naturally appreciated that the present invention is not limited to the specific embodiment, and the following still falls within the scope of the present invention.
(1) The present invention is applicable to various items equipped with a directional input device. Examples of such items include electronic devices such as TVs, game machines, car navigation systems, mobile phones, personal computers, andPDAs, as well as controllers for radio-controlled toys, robots, and vehicles.
(2) As mentioned in the above embodiment, the present invention is applicable to multi-directional input devices as disclosed in JP Patent Application Publication No. 2002-117751. In addition, the present invention is applicable to common four- or eight- directional input devices. Furthermore, an operating member of a directional input device is not limited to a ring-shaped disc as described in the above embodiment. An operating member may be in any shape including an arc, semi-circular, oval, polygonal (hexagonal, octagonal, and so on) shapes, as well as the shape of a pick.
   Furthermore, the present invention is applicable to a device equipped with a rotational operating member which requires to be pressed to be rotated.
(3) According to the above embodiment, the remote controller 4 transmits a controller code composed of angular information. Yet, instead of angular information itself, the controller code may include coordinates locating a touch point. In this case, the STB 1 specifies a direction and calculates an amount of angular change, using sets of coordinates received within a predetermined time period. Furthermore, controller codes may be transmitted by any other means of communications, such as a wireless LAN and Bluetooth, than infrared wireless communications.
(4) The above examples all relate to the user interface processing wit the use of GUI screens. Yet, the present invention is applicable to user interface processing which does not involve the use of GUI screens. Examples of such user interface processing include user interface processing for controlling radio-controlled toys or robots.
(5) In the above embodiment, an input operation is judged as a rotational operation when the amount of angular change between two input operations made within the predetermined time period falls within the predetermined range. It is applicable to adjust: the range of angular change amount used in making such judgment; the transmission intervals of controller codes; and the predetermined time period. Such adjustment may be made depending on the specifications of each device. For example, the condition where 20° < |Amount of Angular Change| < 150° may be used as a judgment criteria.
(6) The present invention may be embodied as a program for causing a device equipped with a CPU to perform any user interface processing described in the above embodiment. Furthermore, the present invention may be embodied as a computer-readable recording medium storing such a program. Examples of the computer-readable recording mediums include a flexible disk, a hard disk, a CD, an MO, a DVD, a BD (Blu-ray Disc), and a semiconductor memory.

### Industrial Applicability

The present invention is applicable to various user interface systems used in conjunction with a directional input device.

## Claims

1. A user interface system comprising:
a directional input unit having an operating member, and operable to receive at a point in time an input specifying one of at least three different directions, in response to a user operation of touching the operating member;
a calculating unit operable to calculate an amount of change from a first direction to a second direction, when the directional input unit receives an input specifying the first direction followed within a predetermined time period by an input specifying the second direction;
a judging unit operable to judge whether the calculated amount of change falls within a predetermined range; and
a processing unit operable to perform a first process associated with each of the first and second directions when the judging unit judges negatively, and perform a second process associated with the amount of change when the judging unit judges affirmatively.

2. The user interface system according to Claim 1, wherein
when the input specifying the first direction is followed within the predetermined time period by two or more inputs specifying directions different from the first direction, the calculating unit calculates the amount of change from the first to second directions which are specified respectively by the inputs received first and last within the predetermined time period.

3. The user interface system according to Claim 1, wherein
one of the directions available for an input to the operating member is a reference direction and each of the directions is expressed by an angle formed with the reference direction, and
the calculating unit calculates an amount of angular change from a first angle expressing the first direction to a second angle expressing the seconddirection, when the directional input unit receives the input specifying the first direction followed within the predetermined time period by the input specifying the second direction.

4. The user interface system according to Claim 3, wherein
each of the directions available for an input to the operating member is expressed by 360° with respect to the reference direction at 0°, and
the predetermined range is 10° < |amount of angular change| < 160°.

5. The user interface system according to Claim 1, further comprising:
a determining unit operable to determine, when the judging unit judges affirmatively and a process most recently performed is a first process, a second process as a candidate process to be performed; and
a counting unit operable to keep count of how many times the determination is made, wherein
when the determination count reaches a predetermined number, the processing unit performs second processes associated with the respective amounts of angular change having been calculated for making the determination.

6. The user interface system according to Claim 1, further comprising:
a determining unit operable to determine, when the judging unit judges negatively and when a process most recently performed is a second process, a first process as a candidate process to be performed; and
a counting unit operable to keep count of how many times the determination is made, wherein
when the determination count reaches a predetermined number, the processing unit performs first processes associated with the respective directions having been received for making the determination.

7. The user interface system according to Claim 1, wherein
when the input specifying the first direction is followed within the predetermined time period by no input specifying another direction, the processing unit performs a first process associated with the first direction.

8. The user interface system according to Claim 1, wherein
the directional input unit includes:
a resistive layer formed on an insulating substrate;
a conducting member formedon a planar substrate facing the resistive layer across a predetermined insulating gap; and
the operating member used to bring the resistive layer partially into contact with the conducting member, wherein
in response to a user operation of touching the operating member under a condition where a predetermined voltage is applied to the resistive layer, the insulating substrate and the planar substrate are brought partially into contact, so that an input specifying a direction is received based on a voltage conducted as a result of the partial contact.

9. The user interface system according to Claim 1, further comprising:
a display unit operable to display (i) a group of options in an annular array, and (ii) a selected position movable to any of the options to indicate that the option is currently focused or selected; and
a storage unit operable to store a first table and a second table, the first table associating the individual directions with the options, and the second table associating the individual amounts of change with movement directions and amounts of the selected position, wherein
when the judging unit judges negatively, the processing unit refers to the first table to accordingly perform the first process, so that an option associated with each direction input to the directional input unit is focused or selected, and
when the judging unit judges affirmatively, the processing unit refers to the second table to accordingly perform the second process, so that the selected position is moved in a movement direction and amount associated with the calculated amount of change.

10. The user interface system according to Claim 1, further comprising:
a display unit operable to display a plurality of files and folders in an annular array; and
a storage unit operable to store a first table and a second table, the first table associating the individual directions with the files, and the second table associating the individual amounts of change with movement directions and amounts of a selected one of the files, wherein
when the judging unit judges negatively, the processing unit refers to the first table to accordingly perform the first process, so that a file associated with each direction input to the directional input unit is selected, and
when the judging unit judges affirmatively, the processing unit refers to the second table to accordingly perform the second process, so that a currently selected file is moved in a movement direction and amount associated with the calculated amount of change and placed into a folder if the selected file is moved to where the folder is located.

11. The user interface system according to Claim 1, further comprising:
a display unit operable to display an image of a dial on which a group of letters are arranged in an annular array; and
a storage unit operable to store a table associating the individual amounts of change with rotational directions and amounts of the dial, wherein
when the judging unit judges negatively, the processing unit performs the first process, so that each input to the directional input unit is discarded and causes no text input, and
when the judging unit judges affirmatively, the processing unit refers to the table to accordingly perform the secondprocess, so that the dial is rotated in a rotational direction and amount associated with the calculated amount of change and that text of a letter placed at a predetermined position as a result of the rotation is input.

12. The user interface system according to Claim 1, further comprising:
a playback unit operable to play content with audio; and
a storage unit operable to store a first table and a second table, the first table associating the individual directions with processes to be performed, and the second table associating the individual amounts of change with levels of audio output of content targeted for playback, wherein
when the judging unit judges negatively, the processing unit refers to the first table to accordingly perform the first process associated with each direction input to the directional input unit, and
when the judging unit judges affirmatively, the processing unit refers to the second table to accordingly perform the second process, so that the content is played with audio output at a level associated with the calculated amount of change.

13. The user interface system according to Claim 1, further comprising:
a playback unit operable to play content; and
a storage unit operable to store a first table and a second table, the first.table associating the individual directions with processes to be performed, and the second table associating the individual amounts of change with speeds at which content targeted for playback is fast-forwarded or rewound, wherein
when the judging unit judges negatively, the processing unit refers to the first table to accordingly perform the first process associated with each direction input to the directional input unit, and
when the judging unit judges affirmatively, the processing unit refers to the second table to accordingly perform the second process, so that the content is fast-forwarded or rewound at a speed associated with the calculated amount of change.

14. The user interface system according to Claim 1, further comprising:
a display unit operable to display (i) a chart composed of options in an array and (ii) a selected position movable to any of the options to indicate the option is currently focused or selected; and
a storage unit operable to store a first table and a second table, the first table associating the individual directions with movement directions of the selectedposition, and the second table associating the individual amounts of change with scaling factors by which a displayed part of the chart is scaled up or down with the selected position as a center, wherein
when the judging unit judges negatively, the processing unit refers to the first table to accordingly perform the first process, so that the selected position is moved in a movement direction associated with each direction input to the directional input unit, and
when the judging unit judges affirmatively, the processing unit refers to the second table to accordingly perform the second process, so that a displayed part of the chart is scaled up or down by a scaling factor associated with the calculated amount of change.

15. The user interface system according to Claim 1, further comprising:
a display unit operable to display a map and a cursor; and
a storage unit operable to store a first table and a second table, the first table associating the individual directions with movement directions of the cursor on the map, and the second table associating the individual amounts of change with scaling factors by which a displayed part of the map is scaled up or down with the cursor as a center, wherein
when the judging unit judges negatively, the processing unit refers to the first table to accordingly perform the first process, so that the cursor is moved in a movement direction associated with each direction input to the directional input unit, and
when the judging unit judges affirmatively, the processing unit refers to the second table to accordingly perform the second process, so that a displayed part of the map is scaled up or down by a scaling factor associated with the calculated amount of change.

16. The user interface system according to Claim 1, further comprising:
a managing unit operable to rank and manage a plurality of options;
a display unit operable to display a group of options in a spiral array, the group including a predetermined number of options of consecutive ranks out of the plurality of options managed by the managing unit; and
a storage unit operable to store a first table and a second table, the first table associating the individual directions with the currently displayed options, and the second table associating the individual amounts of change with numbers by which a ranking range of the currently displayed options are to be shifted, wherein
when the judging unit judges negatively, the processing unit refers to the first table to perform the first process, so that an option associated with each direction input to the directional input unit is focused or selected, and
when the judging unit judges affirmatively, the processing unit refers to the second table to perform the second process, so that another group of options is displayed, said another group including consecutive options within a ranking range shifted from the current ranking range by a number associated with the calculated amount of change.

17. The user interface system according to Claim 1, further comprising:
a display unit operable to display an image of a vinyl record;
a storage unit operable to store a first table and a second table, the first table associating the individual directions with sounds, and the second table associating the individual amounts of change with scratch sounds; and
an output unit operable to produce audio output, wherein
when the judging unit judges negatively, the processing unit refers to the first table to accordingly perform the first processes, so that the output unit produces a sound associated with each direction input to the directional input unit, and
when the judging unit judges affirmatively, the processing unit refers to the second table to accordingly perform the second process, so that the output unit produces a scratch sound associated with the calculated amount of change.

18. A program for use by a computer having an operating member and a directional input unit that is operable to receive at a point in time an input specifying one of at least three directions, the program comprising code operable to cause the computer to perform:
a calculating step of calculating an amount of change from a first direction to a second direction, when the directional input unit receives an input specifying the first direction followed within a predetermined time period by an input specifying the second direction;
a judging step of judging whether the calculated amount of change falls within a predetermined range; and
a step of performing a first process associated with each of the first and second directions when the judging unit judges negatively, and performing a second process associated with the amount of change when the judging unit judges affirmatively.

19. A computer-readable medium storing a program for use by a computer having an operating member and a directional input unit that is operable to receive at a point in time an input specifying one of at least three directions, the program comprising code operable to cause the computer to perform:
a calculating step of calculating an amount of change from a first direction to a second direction, when the directional input unit receives an input specifying the first direction followed within a predetermined time period by an input specifying the second direction;
a judging step of judging whether the calculated amount of change falls within a predetermined range; and
a step of performing a first process associated with each of the first and second directions when the judging unit judges negatively, and performing a second process associated with the amount of change when the judging unit judges affirmatively.
